(19) Europäisches Patentamt / European Patent Office / Office européen des brevets

(11) **EP 4 429 159 A1**

(12) **EUROPEAN PATENT APPLICATION**
published in accordance with Art. 153(4) EPC

(43) Date of publication:
**11.09.2024 Bulletin 2024/37**

(21) Application number: **22903341.0**

(22) Date of filing: **02.12.2022**

(51) International Patent Classification (IPC):
**H04L 5/00** (2006.01)   **H04W 52/02** (2009.01)
**H04W 76/28** (2018.01)

(52) Cooperative Patent Classification (CPC):
**H04L 5/00; H04W 8/08; H04W 52/02;**
**H04W 72/115; H04W 76/28;** Y02D 30/70

(86) International application number:
**PCT/CN2022/136376**

(87) International publication number:
**WO 2023/103919 (15.06.2023 Gazette 2023/24)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **07.12.2021 CN 202111486066**

(71) Applicant: **Huawei Technologies Co., Ltd.**
**Shenzhen, Guangdong 518129 (CN)**

(72) Inventors:
• **XU, Rui**
  **Shenzhen, Guangdong 518129 (CN)**
• **LIAO, Shuri**
  **Shenzhen, Guangdong 518129 (CN)**
• **CHEN, Erkai**
  **Shenzhen, Guangdong 518129 (CN)**
• **CAO, Youlong**
  **Shenzhen, Guangdong 518129 (CN)**
• **CHEN, Weichao**
  **Shenzhen, Guangdong 518129 (CN)**
• **DOU, Shengyue**
  **Shenzhen, Guangdong 518129 (CN)**

(74) Representative: **Gill Jennings & Every LLP**
**The Broadgate Tower**
**20 Primrose Street**
**London EC2A 2ES (GB)**

(54) **DATA TRANSMISSION METHOD AND DATA TRANSMISSION APPARATUS**

(57) A data transmission method and a data transmission apparatus are provided, to help reduce a transmission delay of a service frame. The method includes: A terminal sends first indication information to a network device. The first indication information indicates a statistical parameter of a delay jitter of an arrival time of a service frame or a statistical parameter of a burst length of a service frame. The burst length is duration corresponding to all data packets of the service frame. The statistical parameter of the delay jitter or the statistical parameter of the burst length is for determining a DRX parameter and/or a CG resource. The network device sends second indication information to the terminal. The second indication information indicates the DRX parameter and/or the CG resource. The DRX parameter and/or the CG resource are/is determined based on the first indication information. The terminal and the network device communicate the service frame based on the DRX parameter and/or the CG resource.

1500

| Terminal | Network device |
|---|---|

S1501: First indication information →
← S1502: Second indication information
← S1503: Communicate a service frame →

FIG. 15

## Description

This application claims priority to Chinese Patent Application No. 202111486066.2, filed with the China National intellectual Property Administration on December 7, 2021 and entitled "DATA TRANSMISSION METHOD AND DATA TRANSMISSION APPARATUS", which is incorporated herein by reference in its entirety.

## TECHNICAL FIELD

This application relates to the communication field, and more specifically, to a data transmission method and a data transmission apparatus.

## BACKGROUND

In recent years, with continuous development of the 5th generation mobile communication technology (5th generation mobile communication technology, 5G), a data transmission delay is continuously reduced, and a transmission capacity is increasingly large. A 5G communication system is gradually used in some multimedia services with strong real-time performance and a high data capacity requirement, for example, a video transmission service, cloud gaming (cloud gaming, CG), and extended reality (extended reality, XR).

The XR service has specific cyclicity, and has a cycle that is a reciprocal of a frame rate. In an uplink transmission process, due to factors such as encoding processing of a terminal, an arrival time of the XR service may not be strictly cyclical. For example, for an XR video with a frame rate of 60 frames per second (frames per second, fps), in an ideal case, a video frame arrives at an interval of 16.67 milliseconds (ms). However, actually, arrival delays of video frames are different, and the interval between the video frames is no longer strictly 16.67 ms, that is, an arrival time of the video frame has a jitter (jitter). In addition, each video frame has a large data amount. Therefore, one video frame may be divided into a plurality of data packets for transmission. Due to a delay caused by video encoding and the like, arrival times of a plurality of data packets of a same video frame are broadened in time domain. A broadened length is referred to as a burst length (burst length).

Currently, discontinuous reception (discontinuous reception, DRX) and uplink configured grant (configured grant, CG) are applicable to uplink cyclical service transmission. When the arrival time of the XR service has a delay jitter or a burst length due to an encoding capability of the terminal, an existing DRX configuration mechanism and an existing CG resource configuration mechanism are not applicable to an XR service that arrives non-cyclically. This may cause a delay problem during transmission of the XR service.

## SUMMARY

This application provides a data transmission method and a data transmission apparatus, to help reduce a transmission delay of a service frame.

According to a first aspect, a data transmission method is provided. The method may be performed by a network device, may be performed by a component (for example, a processor, a chip, or a chip system) of a network device, or may be implemented by a logical module or software that can implement all or some of functions of a network device. The method includes: receiving first indication information from a terminal, where the first indication information indicates a statistical parameter of a delay jitter of an arrival time of a service frame or a statistical parameter of a burst length of a service frame, the burst length is duration corresponding to all data packets of the service frame, and the statistical parameter of the delay jitter or the statistical parameter of the burst length is for determining a DRX parameter and/or a CG resource; sending second indication information to the terminal, where the second indication information indicates the DRX parameter and/or the CG resource, and the DRX parameter and/or the CG resource are/is determined based on the first indication information; and communicating the service frame with the terminal based on the DRX parameter and/or the CG resource.

In this application, the network device can determine, based on a statistical parameter of a delay jitter of an arrival time of a service frame that is sent by the terminal and that is within a historical time period or a statistical parameter of a burst length of a service frame that is sent by the terminal and that is within a historical time period, the DRX parameter and/or the CG resource that are/is for transmitting the service frame. The DRX parameter and/or the CG resource that are/is configured based on the statistical parameter of the delay jitter or the burst length of the service frame can be adapted to a service frame that arrives non-cyclically. This helps reduce a transmission delay of the service frame.

With reference to the first aspect, in some implementations of the first aspect, the DRX parameter includes a start time offset of a DRX cycle and a monitoring occasion for a physical downlink shared channel (physical downlink control channel, PDCCH) within the DRX cycle. The start time offset of the DRX cycle is determined based on the statistical parameter of the delay jitter, a time corresponding to a start subframe of the DRX cycle, and an ideal arrival time of the service frame. The monitoring occasion for the PDCCH within the DRX cycle is determined based on the statistical parameter of the delay jitter.

In this application, the ideal arrival time of the service frame is a time at which the service frame cyclically arrives when there is no delay jitter. The monitoring occasion for the PDCCH is a time within which the PDCCH can be monitored. If the monitoring time for the PDCCH configured by the network device is shorter, and the PDCCH is not monitored, the service frame can be transmitted only within a next DRX cycle. This causes the transmission delay of the service frame. If the monitoring time for the PDCCH configured by the network device is longer, the terminal needs to listen to the PDCCH in a long period of time. Consequently, power consumption of the terminal is excessively high. Therefore, the start time offset and the monitoring time for the PDCCH that are in the DRX parameter that can be determined by the network device based on the statistical parameter of the delay jitter can match an actual arrival time of the service frame. This helps reduce the transmission delay or reduce the power consumption of the terminal.

With reference to the first aspect, in some implementations of the first aspect, the CG resource includes a time domain resource. A quantity of time domain resources is determined based on the statistical parameter of the delay jitter and the ideal arrival time of the service frame.

In this application, the time domain resource determined by the network device based on the statistical parameter of the delay jitter can match the actual arrival time of the service frame. This helps reduce the transmission delay or reduce a resource waste.

With reference to the first aspect, in some implementations of the first aspect, the statistical parameter of the delay jitter includes a distribution parameter of the delay jitter.

In this application, the distribution parameter of the delay jitter can include at least one of a distribution mean value, a distribution variance, or a distribution range.

With reference to the first aspect, in some implementations of the first aspect, the CG resource includes a time domain resource. A quantity of time domain resources is determined based on the statistical parameter of the burst length and an arrival time of the data packet of the service frame.

In this application, the service frame can be divided into a plurality of data packets for transmission. Arrival times of the plurality of data packets may cause the burst length of the service frame. If a length of the CG resource configured by the network device is less than the burst length, a corresponding data packet can be transmitted only within a next CG cycle. If a length of the CG resource configured by the network device is greater than the burst length, a waste of the CG resource is caused. Therefore, the network device can determine, based on the statistical parameter of the burst length within the historical time period, the CG resource that adapts to the burst length. This helps reduce the transmission delay of the service frame or reduce the waste of the CG resource.

With reference to the first aspect, in some implementations of the first aspect, the CG resource further includes a frequency domain resource. The first indication information further indicates a data amount of the service frame. A quantity of frequency domain resources is determined based on the quantity of time domain resources and the data amount of the service frame.

With reference to the first aspect, in some implementations of the first aspect, the statistical parameter of the burst length includes a distribution parameter of the burst length.

In this application, the distribution parameter of the burst length can include at least one of a distribution mean value, a distribution variance, or a distribution range.

With reference to the first aspect, in some implementations of the first aspect, the first indication information is included in user assistance information (user assistance information, UAI).

In this application, the statistical parameter of the delay jitter or the statistical parameter of the burst length indicated by the first indication information can be included in the UAI message. A field related to the statistical parameter of the delay jitter or the statistical parameter of the burst length can be added to the UAI message, to configure the DRX parameter and/or the CG resource.

According to a second aspect, a data transmission method is provided. The method may be performed by a terminal, may be performed by a component (for example, a processor, a chip, or a chip system) of a terminal, or may be implemented by a logical module or software that can implement all or some of functions of a terminal. The method includes: sending first indication information to a network device, where the first indication information indicates a statistical parameter of a delay jitter of an arrival time of a service frame or a statistical parameter of a burst length of a service frame, the burst length is duration corresponding to all data packets of the service frame, and the statistical parameter of the delay jitter or the statistical parameter of the burst length is for determining a DRX parameter and/or a CG resource; receiving second indication information from the network device, where the second indication information indicates the DRX parameter and/or the CG resource; and communicating the service frame with the network device based on the DRX parameter and/or the CG resource.

This application also helps reduce a transmission delay of the service frame. For a specific analysis process, refer to the descriptions of the first aspect. Details are not described herein again.

With reference to the second aspect, in some implementations of the second aspect, the statistical parameter of the delay jitter includes a distribution parameter of the delay jitter.

With reference to the second aspect, in some implementations of the second aspect, the distribution parameter of the burst length may include at least one of a distribution mean value, a distribution variance, or a distribution range.

With reference to the second aspect, in some implementations of the second aspect, the first indication information is included in UAI.

According to a third aspect, a data transmission apparatus is provided, configured to perform the method according to any possible implementation of any one of the foregoing aspects. Specifically, the apparatus includes a module configured to perform the method according to any possible implementation of any one of the foregoing aspects.

According to a fourth aspect, another data transmission apparatus is provided, including a processor. The processor is coupled to a memory, and may be configured to execute instructions in the memory, to implement the method according to any possible implementation of any one of the foregoing aspects. Optionally, the apparatus further includes a memory. Optionally, the apparatus further includes a communication interface, and the processor is coupled to the communication interface.

In an implementation, the data transmission apparatus is a network device or a terminal. The communication interface may be a transceiver or an input/output interface when the data transmission apparatus is a network device or a terminal.

In another implementation, the data transmission apparatus is a chip configured in a network device or a terminal. The communication interface may be an input/output interface when the data transmission apparatus is a chip configured in a network device or a terminal.

According to a fifth aspect, a processor is provided, including an input circuit, an output circuit, and a processing circuit. The processing circuit is configured to: receive a signal through the input circuit, and transmit a signal through the output circuit, so that the processor performs the method according to any possible implementation of any one of foregoing aspects.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver. A signal output by the output circuit may be output to, for example, but not limited to, a transmitter and transmitted by the transmitter. The input circuit and the output circuit may be a same circuit, where the circuit is used as the input circuit and the output circuit at different moments. Specific implementations of the processor and various circuits are not limited in this application.

According to a sixth aspect, a processing apparatus is provided, including a processor and a memory. The processor is configured to: read instructions stored in the memory, receive a signal through a receiver, and transmit a signal through a transmitter, to perform the method according to any possible implementation of any one of the foregoing aspects.

Optionally, there are one or more processors, and there are one or more memories.

Optionally, the memory may be integrated with the processor, or the memory and the processor are separately disposed.

In a specific implementation process, the memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this application.

It should be understood that a related data exchange process like sending indication information may be a process of outputting the indication information from the processor, and receiving capability information may be a process of receiving input capability information by the processor. Specifically, data output by the processor may be output to the transmitter, and input data received by the processor may be from the receiver. The transmitter and the receiver may be collectively referred to as a transceiver.

The processing apparatus according to the sixth aspect may be a chip. The processor may be implemented by using hardware, or may be implemented by using software. When the processor is implemented by using hardware, the processor may be a logic circuit, an integrated circuit, or the like. When the processor is implemented by using software, the processor may be a general-purpose processor, and is implemented by reading software code stored in the memory. The memory may be integrated in the processor, or may be located outside the processor and exist independently.

According to a seventh aspect, a computer program product is provided. The computer program product includes a computer program (which may also be referred to as code or instructions). When the computer program is run, a computer is enabled to perform the method according to any possible implementation of any one of the foregoing aspects.

According to an eighth aspect, a computer-readable storage medium is provided. The computer-readable storage medium stores a computer program (which may also be referred to as code or instructions). When the computer program is run on a computer, the computer is enabled to perform the method according to any possible implementation of any one of the foregoing aspects.

**BRIEF** DESCRIPTION OF DRAWINGS

FIG. 1 is a diagram of an architecture of a cloud VR/cloud AR communication network;
FIG. 2 is a diagram of a model of an XR service;
FIG. 3 is a diagram of arrival of an XR video frame;
FIG. 4 is a diagram of a burst length;
FIG. 5 is a diagram of a DRX cycle;
FIG. 6 is a diagram of a DRX inactivity timer;
FIG. 7 is a diagram of impact of a delay jitter on a DRX parameter according to an embodiment of this application;
FIG. 8 is another diagram of impact of a delay jitter on a DRX parameter according to an embodiment of this application;
FIG. 9 is a diagram of impact of a delay jitter on a CG resource according to an embodiment of this application;
FIG. 10 is another diagram of impact of a delay jitter on a CG resource according to an embodiment of this application;
FIG. 11 is a diagram of impact of a burst length on a CG resource according to an embodiment of this application;
FIG. 12 is a diagram of a scenario architecture according to an embodiment of this application;
FIG. 13 is a diagram of another scenario architecture according to an embodiment of this application;
FIG. 14 is a diagram of still another scenario architecture according to an embodiment of this application;
FIG. 15 is a schematic flowchart of a data transmission method according to an embodiment of this application;
FIG. 16 is a diagram of configuring a DRX monitoring duration according to an embodiment of this application;
FIG. 17 is a diagram of configuring a DRX pattern according to an embodiment of this application;
FIG. 18 is another diagram of configuring a DRX pattern according to an embodiment of this application;
FIG. 19 is a diagram of configuring a CG resource according to an embodiment of this application;
FIG. 20 is another diagram of configuring a CG resource according to an embodiment of this application;
FIG. 21 is a block diagram of a data transmission apparatus according to an embodiment of this application;
FIG. 22 is a block diagram of another data transmission apparatus according to an embodiment of this application; and
FIG. 23 is a block diagram of still another data transmission apparatus according to an embodiment of this application.

## DESCRIPTION OF EMBODIMENTS

The following describes the technical solutions in this application with reference to the accompanying drawings.
Before the technical solutions in this application are described, related terms in this application are first described in detail.

1. XR service

In recent years, mobile services are booming, and services such as virtual reality (virtual reality, VR), augmented reality (augmented reality, AR), mixed reality (mixed reality, MR), and extended reality (XR) are gradually mature. Compared with conventional services such as a voice, web browsing, and a game, the VR, AR, MR, and XR services have large data packets, require a short transmission delay, and have specific cyclicity. To meet a transmission requirement of this type of service, the 3rd generation partnership project (3rd generation partnership project, 3GPP) sets up a working group, which collectively refers to VR, AR, and MR as XR, and studies how to efficiently support the XR service in a wireless communication network in an energy-saving manner. For ease of description, the XR service is used to represent the VR, AR, or MR service in the following.
With rapid increase of a communication transmission rate, a real-time video transmission service gradually becomes one of core services of a current network. With continuous progress and improvement of an XR technology, a related industry is also booming. Nowadays, as one in the XR technology, a VR technology already enters various fields closely related to people's production and life, for example, education, entertainment, military, medical care, environmental protection, transportation, and public health. Compared with a conventional video service, the VR service has advantages such as a multi-view advantage and strong interactivity, providing brand-new visual experience for a user. In VR, a plurality of technologies such as computer graphics and multimedia are integrated, to simulate functions of human sensory organs, for example, a visual sense, an auditory sense, and a tactile sense. In this way, people immerse in a virtual world generated by a computer, feeling as if they are there, and perform real-time communication through a language, a gesture, and the like. This enhances an immersion sense. By using the VR technology, people feel reality of the real world, and can further break through restrictions such as time and space, to have wonderful experience of entering the virtual world.

In AR, by using a computer technology, virtual information is superimposed to the real world, is displayed through devices such as a mobile phone, a tablet computer, and glasses, and is perceived by people. In this way, real and virtual information is converged, enriching the real world. In short, more information is given to a real object, to enhance a stereoscopic sense, and enhance a visual effect and interactive experience.

In cloud virtual reality (Cloud VR) and cloud augmented reality (Cloud AR), cloud computing and cloud rendering concepts and technologies are introduced to a VR/AR service application. Through a high-rate and stable network, a display output, an audio output, and the like on a cloud are encoded, compressed, and then transmitted to user equipment (user equipment, UE). In this way, content of the VR/AR service is migrated to the cloud and rendered to the cloud, and a VR/AR terminal can also meet lightweight and mobility requirements.

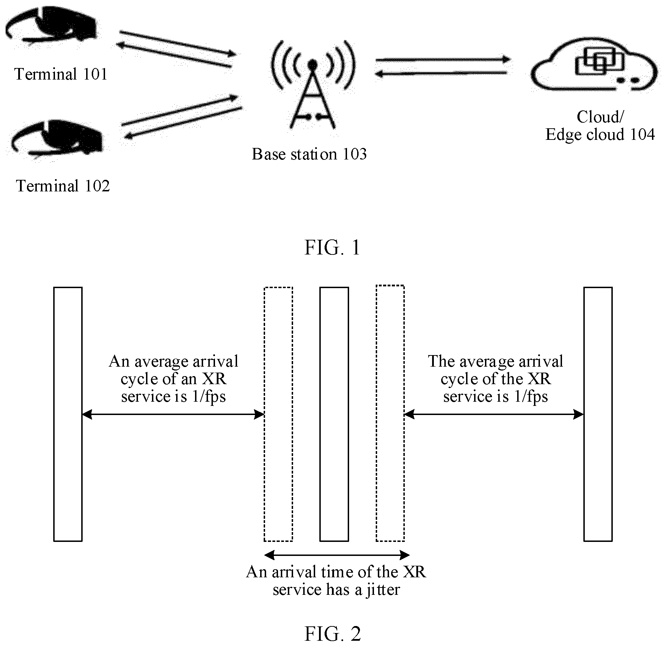

FIG. 1 is a diagram of an architecture of a cloud VR/cloud AR communication network. In FIG. 1, a terminal 101, a terminal 102, a base station 103, and a cloud/edge cloud 104 are included. The terminal 101 and the terminal 102 may be VR/AR terminals. The terminal 101 and the terminal 102 may be connected to a network via the base station 103 or another access point, and obtain a VR service/AR service from the cloud/edge cloud 104.

The XR service usually has a large data amount. For example, a size of a 4K video frame is approximately 30 KB to 100 KB. In addition, sizes of video frames usually change. Because compression rates and frame types of the video frames are different, the sizes of the video frames change greatly. Different XR services have different uplink and downlink service models. A display change of scene content in VR is caused by a posture or a location (an action). Location and posture information are mainly uploaded in VR, a data amount is small, and is usually only dozens of kbps. Downlink transmission is mainly for a rendered video stream, and a data amount is large, and may reach dozens of to hundreds of Mbps. Different from that in VR, a display change of scene content in AR is caused by a change of a fixation focus target and a change of a spatial relationship (action) between a location and a fixation point. Visual information (including a depth) required for perception is uploaded in AR. Therefore, uplink transmission is mainly for a clear and stable picture or video stream with a larger data amount, or may be for some extracted environment feature information. On a basis of industry research and evaluation, for an interactive AR service, a network uplink rate is required to be approximately 2 Mbps to meet initial experience and 10 Mbps to 20 Mbps to meet advanced experience. Compared with cloud VR, cloud AR has higher requirement on an uplink transmission rate and is more challenging in uplink transmission. Uplink transmission is considered in embodiments of this application.

A service model of the XR service is usually a cyclical arrival service model based on a frame rate. In uplink transmission, due to factors such as encoding processing of a terminal, an arrival time of a service may not be strictly cyclical, and may have a jitter (jitter). FIG. 2 is a diagram of a model of an XR service. On a basis of research of the 3GPP and with reference to the diagram of the model of the XR service shown in FIG. 2, it can be learned that the XR service has the following features.

(1) The XR service has specific cyclicity, and has a cycle that is a reciprocal of a frame rate. For example, the frame rate of the XR service may be 30 fps, 60 fps, 90 fps, or 1200 fps, and a corresponding period in a time unit of millisecond (ms) may be 33.33 ms, 16.67 ms, 11.11 ms, or 8.33 ms.
(2) A data packet of the XR service is large. When a frame rate of an AR/VR video stream is 60 fps, a bit rate is 30 Mbps or 45 Mbps. When a frame rate of a cloud game is 60 fps, a bit rate is 8 Mbps, 30 Mbps, or 45 Mbps.
(3) The arrival time of the XR service has a specific jitter. For example, a jitter time may be [-4, 4] ms.
(4) The XR service requires an extremely low transmission delay, and a transmission delay in a network is as low as 5 ms, 10 ms, or 15 ms.

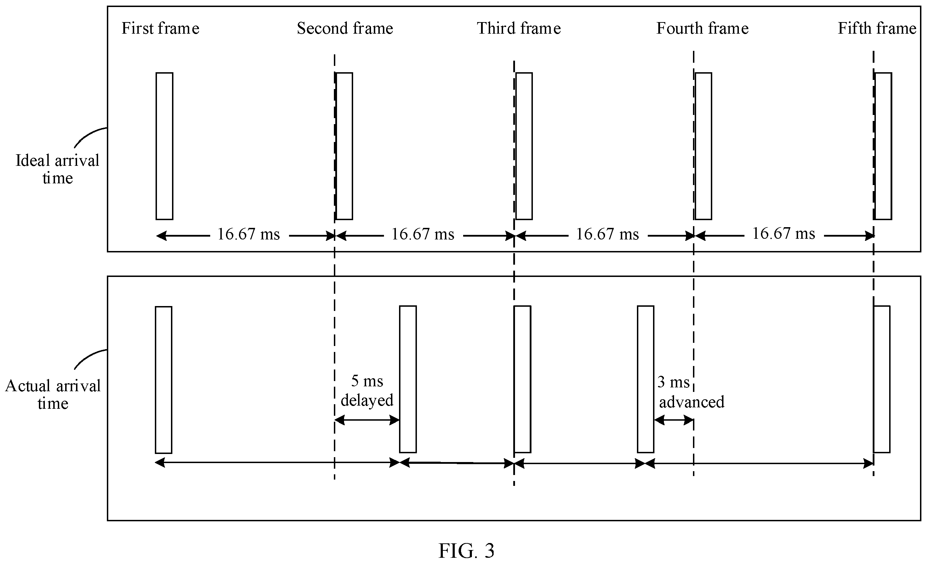

FIG. 3 is a diagram of arrival of an XR video frame. As shown in FIG. 3, for a video with a frame rate of 60 fps, in an ideal case, a video frame arrives at an interval of 16.67 ms. However, actually, arrival delays of video frames are different, and a frame interval is no longer strictly 16.67 ms, that is, an arrival moment of a frame has a jitter. In embodiments of this application, such jitter is referred to as a "delay jitter". For example, in FIG. 3, a second frame arrives 5 ms delayed, that is, a delay jitter=5 ms; and a fourth frame arrives 3 ms advanced, that is, a delay jitter=-3 ms.

It should be understood that different terminals have different encoding processing capabilities, and therefore, ranges and distributions of delay jitters are also different.

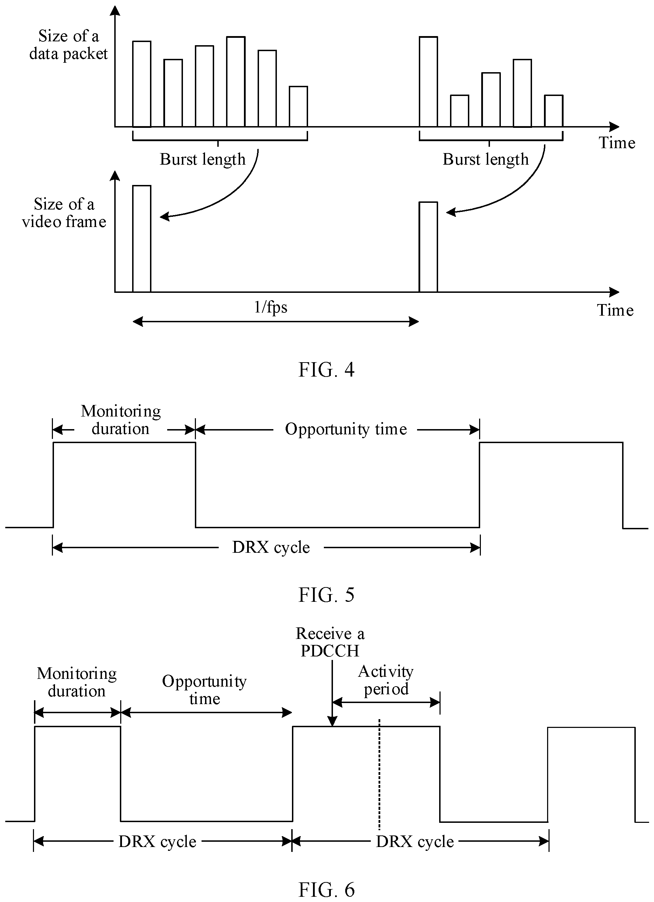

FIG. 4 is a diagram of a burst length. For example, the XR service is a video service. There are a large quantity of XR video frames. Therefore, one video frame may be divided into a plurality of internet protocol (internet protocol, IP) data packets for transmission. As shown in FIG. 4, for example, a first frame is divided into six IP data packets, and a second frame is divided into five IP data packets. Due to a delay caused by video encoding and the like, an arrival time of each IP data packet of a same video frame is broadened in time domain. A broadened length is referred to as a burst length (burst length). It should be understood that sizes of different frames and encoding processing capabilities of different terminals are different, and therefore ranges of burst lengths may also be different.

2. DRX mechanism

For a terminal, to reduce a data transmission delay, the terminal may listen to downlink control information (downlink control information, DCI) of a network device within each slot. This is beneficial for receiving uplink grant or downlink data, but also causes higher power consumption to the terminal. To reduce power consumption, when no data is transmitted, the terminal may stop receiving a physical downlink control channel (physical downlink control channel, PDCCH) to reduce the power consumption. This increases a use time of a battery of the terminal. Therefore, the DRX mechanism is introduced in a 5G new radio (new radio, NR) standard to reduce the power consumption of the terminal.

FIG. 5 is a diagram of a DRX cycle (DRX cycle). As shown in FIG. 5, a DRX cycle includes monitoring duration (on duration) and a DRX opportunity time (opportunity for DRX). Within the monitoring duration, the terminal may listen to the PDCCH normally. Within the DRX opportunity time, the terminal has an opportunity to enter a sleep state, and no longer listens to the PDCCH, to reduce the power consumption.

It should be understood that the terminal in the sleep state may receive data from another physical channel, for example, a physical downlink shared channel (physical downlink shared channel, PDSCH) or an acknowledgment signal (acknowledge, ACK). In semi-persistent scheduling (semi-persistent scheduling, SPS), the terminal in the sleep state may receive PDSCH data sent within a cyclically configured downlink subframe.

FIG. 6 is a diagram of a DRX inactivity timer. Usually, after the terminal is scheduled and receives or sends data within one slot, the terminal may continue to be scheduled within subsequent several slots. If the terminal needs to wait for a next DRX cycle to receive or send data, an extra delay is caused. To reduce this type of delay, as shown in FIG. 6, the network device may configure a parameter of an inactivity timer (DRX inactivity timer) for the terminal. After being scheduled, the terminal may start the inactivity timer, and continuously listen to the PDCCH within a time (this period of time may also be referred to as an activity time in embodiments of this application) corresponding to the parameter of the inactivity timer, until the inactivity timer expires. If new data of the terminal is scheduled within the time corresponding to the parameter of the inactivity timer, the inactivity timer is restarted once.

To avoid a case in which the terminal cannot enter the sleep state in time because the monitoring duration (on duration) and the parameter of the inactivity timer (DRX inactivity timer) are set to be excessively long, the network device may send a DRX command to the terminal by using a media access control (media access control, MAC) control unit (control element, CE). The DRX command indicates the terminal to stop listening to the PDCCH. After receiving the MAC CE including the DRX command, the terminal stops listening to the PDCCH, and immediately enters the sleep state.

A DRX parameter further includes a start time offset (DRX start offset) parameter, which is describing a start subframe of the DRX cycle. For example, if the DRX cycle is 16 subframes, a range of a start time offset is 0 to 15 subframes.

3. Uplink configuration scheduling (configuration scheduling, CS) and configured grant (configured grant, CG)

CS and CG are suitable for uplink cyclical service transmission. CG is used as an example. CG means that, in an uplink transmission process, an uplink scheduling resource needs to be allocated only once by using radio resource control (radio resource control, RRC) signaling or a PDCCH, and then a terminal may cyclically and repeatedly use a same time-frequency resource to perform uplink transmission.

There are two types of CG. A procedure of scheduling CG of a type 1 may approximately include the following steps.

Step 1: A network device sends parameters of a CG resource to the terminal by using the RRC signaling, for example, a CG cycle, a time domain resource of CG, and a frequency domain resource of CG. It should be understood that the network device may configure, corresponding to different CG cycles, parameters of a plurality of CG resources.

Step 2: The network device activates a corresponding CG resource by using RRC signaling.

Step 3: A MAC entity of the terminal determines, based on the parameter of the CG resource, a slot or a symbol that is of the CG resource and that is cyclically effective, and transmits uplink data, namely, a physical uplink shared channel (physical uplink shared channel, PUSCH), within the effective slot or symbol.

Step 4: After transmission of a service data is completed, the network device sends DCI to the terminal, where the DCI is for deactivating a CG configuration and releasing the CG resource.

A procedure of scheduling CG of a type 2 is similar to that of the type 1. Refer to the procedure of scheduling CG of the type 1. A difference lies in that, in the procedure of scheduling CG of the type 2, the network device activates a corresponding CG resource by sending a PDCCH to the terminal, and indicates, by using a resource allocation indication field, a time domain resource and frequency domain resource that are specifically allocated to CG for transmission.

4. User assistance information UAI

A terminal knows a flow generation mode of an XR service, but a network device may obtain only limited information about an uplink service, for example, a cycle of the uplink service, by using related information such as a quality of service identifier (quality of service identifier, 5QI) in 5G. The 5QI is a scalar, and is for pointing to a 5G quality of service (quality of service, QoS) feature. UAI specified in an existing protocol includes a DRX parameter. An Inactivity Timer field describing the DRX parameter indicates a length of an activity period in a DRX cycle. A LongCycle field indicates a long DRX cycle. A ShortCycle field indicates a short DRX cycle. A ShortCycleTimer field indicates a multiple of a configured short cycle.

It can be learned from the foregoing descriptions that an arrival time of the XR service jitters. For example, for an XR service with a frame rate of 60 fps, it is assumed in current research of 3GPP R17 that a value of a jitter complies with a truncated Gaussian distribution. To be specific, a mean value is 0, a standard deviation is 2 ms, and a value range of a delay jitter is [-4 ms, 4 ms]. Because encoding processing capabilities of different terminals are different, jitter ranges of the different terminals may also be different.

An existing DRX mechanism cannot efficiently cope with the delay jitter of the arrival time of the XR service. Therefore, there may be the following problems when the existing DRX mechanism is for the XR service.

(1) DRX monitoring duration (on duration) configured by the network device within the DRX cycle is excessively long, resulting in excessively high power consumption of the terminal.

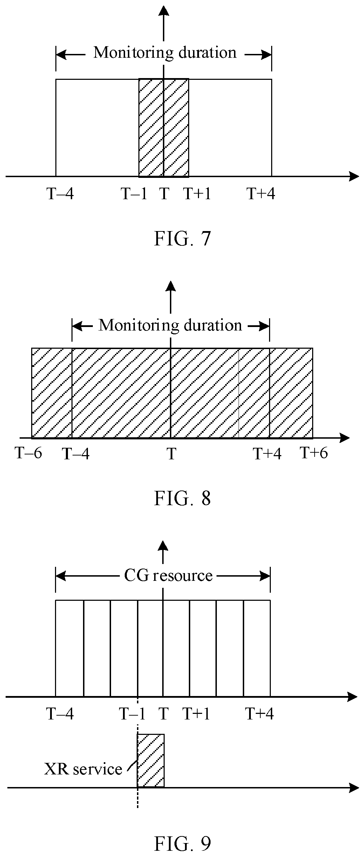

FIG. 7 is a diagram of impact of the delay jitter on the DRX parameter according to an embodiment of this application. As shown in FIG. 7, it is assumed that the frame rate of the XR service is 60 fps, and a delay jitter of the terminal within a historical time period falls within a small range, for example, [-1 ms, 1 ms], as shown in a shadow part in the figure. In other words, the XR service may arrive between a moment T-1 and a moment T+1, where T is an ideal arrival moment of the XR service. In an existing DRX parameter configuration manner, the network device configures the DRX cycle to 16.67 m and configures the monitoring duration (on duration) to 8 ms based on the frame rate. To be specific, it is assumed that the value range of the delay jitter is [-4 ms, 4 ms]. The terminal needs to start to monitor a PDCCH from a moment T-4. When the XR service arrives at a moment T+1, the terminal transmits the XR service. Such a configuration can be for resolving a delay problem during transmission of the XR service. However, the PDCCH needs to be monitored within half of a time, resulting in excessively high power consumption of the terminal.

(2) DRX monitoring duration (on duration) configured by the network device within the DRX cycle is excessively short, and consequently, a transmission delay of the XR service is increased.

FIG. 8 is another diagram of impact of the delay jitter on the DRX parameter according to an embodiment of this application. As shown in FIG. 8, it is assumed that the frame rate of the XR service is 60 fps, and a delay jitter of the terminal within a historical time period falls within a large range, for example, [-6 ms, 6 ms], as shown in a shadow part in the figure. In other words, the XR service may arrive between a moment T-6 and a moment T+6, where T is an ideal arrival moment of the XR service. In an existing DRX parameter configuration manner, the network device configures the DRX cycle to 16.67 m and configures the monitoring duration (on duration) to 8 ms based on the frame rate. To be specific, it is assumed that the value range of the delay jitter is [-4 ms, 4 ms]. When arriving at the moment T+6, the XR service already misses monitoring duration of a current DRX cycle. Data can be transmitted only within a next DRX cycle. This increases a delay of transmitting the XR service.

In addition to DRX parameter, the value of the delay jitter also affects a CG resource configuration. The existing CG mechanism cannot efficiently cope with the delay jitter of the arrival time of the XR service. Therefore, there may be the following problems when the existing CG mechanism is for the XR service.

(1) The network device configures excessive CG resources within a CG cycle, resulting in a waste of the CG resource.

FIG. 9 is a diagram of impact of the delay jitter on the CG resource according to an embodiment of this application. Similarly, the XR service with the frame rate of 60 fps is used as an example. According to an existing CG resource configuration method, the network device configures an effective cycle (a CG cycle for short) of the CG resource to 16.67 ms based on the frame rate, and configures eight CG time domain resources within one CG cycle. It is assumed that the delay jitter of the terminal within the historical time period falls within the small range, for example, [-1 ms, 1 ms]. When the XR service arrives at the moment T-1, because there is a configured CG resource after the moment T-1, the XR service may be transmitted in time. This can resolve the delay problem during transmission of the XR service, but causes a waste of at least six CG resource.

(2) The network device configures fewer CG resources within the CG cycle, and consequently, the transmission delay of the XR service is increased.

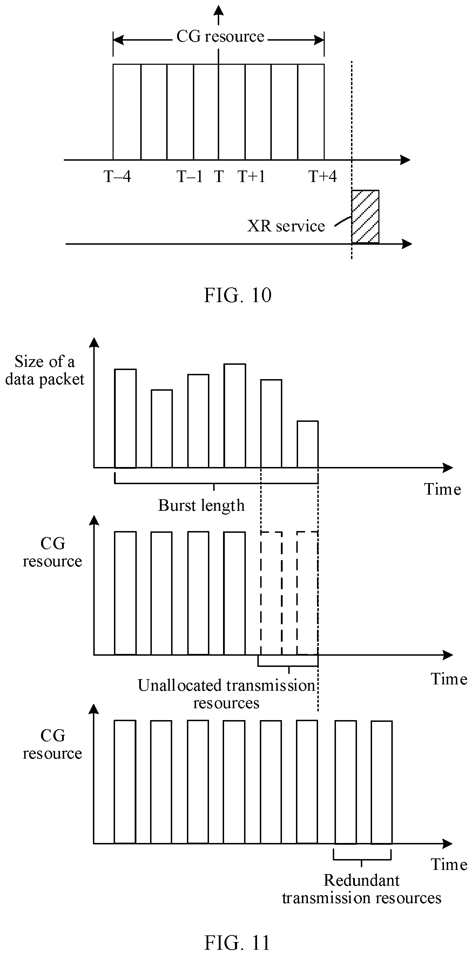

FIG. 10 is another diagram of impact of the delay jitter on the CG resource according to an embodiment of this application. Similarly, the XR service with the frame rate of 60 fps is used as an example. According to an existing CG resource configuration method, the network device configures a CG cycle to 16.67 ms based on the frame rate, and configures eight CG time domain resources within one CG cycle. It is assumed that the delay jitter of the terminal within the historical time period falls within the large range, for example, [-6 ms, 6 ms]. When arriving at a moment T+5, the XR service already misses a time domain resource allocated within a current CG cycle. Data can be transmitted only within a next CG cycle. This increases the delay of transmitting the XR service.

As mentioned above, due to a delay caused by video encoding and the like, arrival times of a plurality of data packets of a same XR service are spread in time domain, and different terminals have different encoding capabilities. Therefore, burst lengths caused by broadening of the arrival times of the plurality of data packets in time domain may also be different.

The existing CG mechanism cannot efficiently cope with a burst length of an arrival time of the XR service. Therefore, when the existing CG mechanism is for the XR service, there may be a problem that the transmission delay of the XR service is increased or the waste of the transmission resource is caused.

FIG. 11 is a diagram of impact of the burst length on the CG resource according to an embodiment of this application. As shown in FIG. 11, if a CG time domain resource that is allocated by the network device to the terminal and that is for transmitting a data packet is less than the burst length, a remaining untransmitted data packet can be transmitted only within a next CG cycle. This causes the transmission delay of the XR service. If a CG time domain resource that is allocated by the network device to the terminal and that is for transmitting a data packet is greater than the burst length, CG time domain resources are correspondingly allocated to corresponding transmission moments of all data packets. Consequently, although the transmission delay of the XR service can be reduced, a waste of a resource is caused.

It should be understood that intervals between the data packets in FIG. 11 may be equal or unequal. Similarly, intervals between the CG time domain resources may be equal or unequal. This is not limited in embodiments of this application.

In view of a problem that the existing DRX mechanism and the existing CG mechanism cannot efficiently cope with a delay jitter of an arrival time and a burst length of a service frame, embodiments of this application provide a data transmission method and a data transmission apparatus. In the method, a terminal sends, to a network device, a statistical parameter of a delay jitter of an arrival time of a service frame. Alternatively, a terminal reports, to a network device, a statistical parameter of a burst length of a service frame. The network device may configure a DRX parameter and/or a CG resource for the terminal based on the received statistical parameter of the delay jitter or the received statistical parameter of the burst length. Then, the terminal may transmit the service frame based on the DRX parameter and/or the CG resource that are/is configured by the network device. This helps reduce a transmission delay of the service frame.

It should be understood that a CG slot resource and a DRX cycle in embodiments of this application may be counted in a unit of slot or millisecond. For example, when a subcarrier spacing is 15 kHz, one slot is equal to 1 ms. When a subcarrier spacing is 30 kHz, one slot is equal to 0.5 ms, that is, there are two slots within 1 ms. When a subcarrier spacing is 60 kHz, one slot is equal to 0.25 ms, that is, there are four slots within 1 ms. When a subcarrier spacing is 120 kHz, one slot is equal to 0.125 ms, that is, there are eight slots within 1 ms. When a subcarrier spacing is 480 kHz, one slot is equal to 312.5 microseconds ($\mu$s), that is, there are 32 slots within 1 ms. When a subcarrier spacing is 960 kHz, one slot is equal to 156.25 $\mu$s, that is, there are 64 slots within 1 ms.

Without loss of generality, the following provides example descriptions by using an example in which duration of one slot is 1 ms.

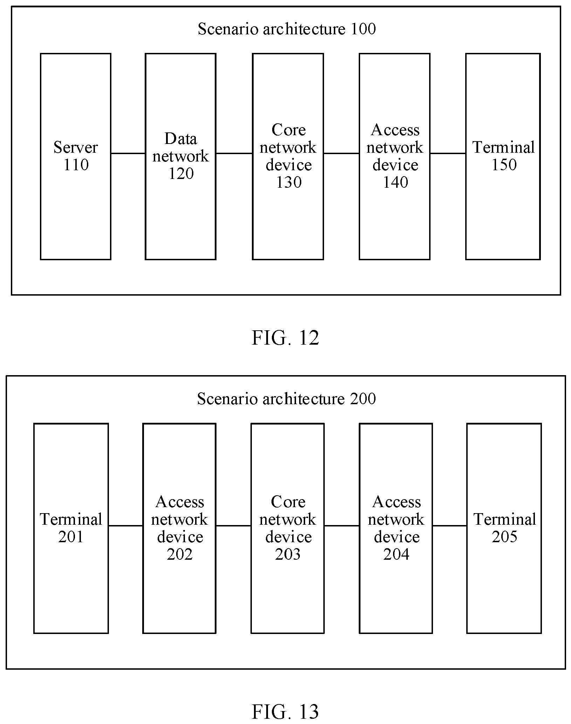

FIG. 12 is a diagram of a scenario architecture 100 according to an embodiment of this application. As shown in FIG. 12, the scenario architecture 100 may include a server 110, a data network (data network, DN) 120, a core network device 130, an access network device 140, and a terminal 150.

The server 110 is configured for encoding, decoding, rendering, and the like of a video source. In network transmission, the data network 120 (for example, a fixed network), the core network device 130, and the access network device 140 that are connected in a wireless or wired manner may be included.

The core network device 130 and the access network device 140 may be different independent physical devices. Alternatively, a function of the core network device 130 and a logical function of the access network device 140 may be integrated into a same physical device. Alternatively, some functions of the core network device 130 and some functions of the access network device 140 may be integrated into one physical device. The terminal 150 is connected to the access network device 140 in a wireless manner, and the terminal 150 may be at a fixed location or may be movable. A quantity of network devices and a quantity of terminals that are included in a mobile communication system are not limited in embodiments of this application.

FIG. 13 is a diagram of another scenario architecture 200 according to an embodiment of this application. As shown in FIG. 13, the scenario architecture 200 may include a terminal 201, an access network device 202, a core network device 203, an access network device 204, and a terminal 205.

For example, the scenario architecture 200 may be a tactile internet, the terminal 201 is used as a primary domain, and the terminal 205 is used as a controlled domain. For example, the terminal 205 may be a remote robot. The terminal 201 may receive an audio/video feedback signal from the terminal 205 through a tactile and manual system interface. With help of various commands and feedback signals, the terminal 201 and the terminal 205 communicate with each other through a two-way communication link between the terminal 201, the access network device 202, the core network device 203, and the access network device 204 in a network domain, to form a global closed loop.

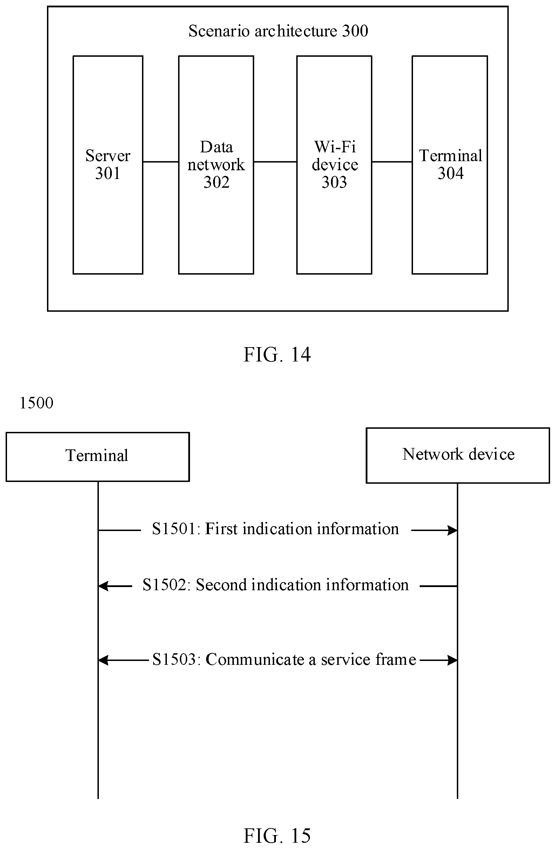

FIG. 14 is a diagram of a still another scenario architecture 300 according to an embodiment of this application. As shown in FIG. 14, the scenario architecture 300 includes a server 301, a data network 302, a Wi-Fi device 303, and a terminal 304.

For example, the data network 302 may be a fixed network. The cloud server 301 may send XR media data or an ordinary video to the terminal 304 via the data network 302 and the Wi-Fi device 303.

For example, the Wi-Fi device 303 may be a router, a wireless access point (access point, AP), or a set-top box. This is not limited in embodiments of this application.

The server 301 may be connected to the data network 302 in a wireless manner. The data network 302 may be connected to the Wi-Fi device 303 in a wireless manner. The Wi-Fi device 303 may establish a Wi-Fi link to the terminal 304 for data transmission.

It should be understood that, for the scenario architecture 300, the Wi-Fi device 303 may be used as a network device to communicate with a terminal.

The following describes network elements in the scenario architecture 100, the scenario architecture 200, and the scenario architecture 300.

A server (for example, the server 110 and/or the server 301) is configured to implement functions such as encoding and rendering a video source.

A data network (for example, the data network 120 and/or the data network 302) may provide, for example, an operator service, internet access, or a third-party service. The server and the data network may be different independent physical devices. Alternatively, a function of the server and a logical function of the data network may be integrated into a same physical device. Alternatively, some functions of a core network device and some functions of a network device may be integrated into one physical device.

A core network device (for example, the core network device 130 and/or the core network device 203) is responsible for completing three functions: registration, connection, and session management.

For example, the core network device may include at least one of a network exposure function (network exposure function, NEF) network element, a policy control function (policy control function, PCF) network element, an application function (application function, AF) network element, an access and mobility management function (access and mobility management function, AMF) network element, a session management function module (session management function, SMF) network element, or a user plane function (user plane function, UPF) network element.

The NEF network element may expose a service and a capability of a 3rd generation partnership project (3rd generation partnership project, 3GPP) network function to the AF network element, and may also enable the AF to provide information for the 3GPP network function.

The PCF network element may perform policy management on a charging policy and a quality of service (quality of service, QoS) policy. The AF network element mainly transfers a requirement of an application side on a network side. The AMF network element mainly performs functions such as mobility management and access authentication/authorization. In addition, the AMF network element is further responsible for transmitting a user policy between a terminal and the PCF network element. The SMF network element mainly implements session management functions such as IP address allocation for the terminal, selection of the UPF network element, charging, and QoS policy control. The UPF network element is used as an interface to the data network, and implements functions such as user plane data forwarding, session/flow level based charging statistics collection, and bandwidth limitation.

An access network device (for example, the access network device 140, the access network device 202, and/or the access network device 204) may be any device having a wireless transceiver function.

The terminal (for example, the terminal 150, the terminal 201, the terminal 205, and/or the terminal 304) in embodiments of this application may be user equipment, an access terminal, a subscriber unit, a subscriber station, a mobile station, a remote station, a remote terminal, a mobile device, a user terminal, a wireless communication device, a user agent, or a user apparatus. The terminal in embodiments of this application may be a mobile phone (mobile phone), a tablet computer (pad), a computer with a wireless transceiver function, a VR terminal, an AR terminal, an MR terminal, an XR terminal, a holographic display terminal, a wireless terminal in industrial control (industrial control), a wireless terminal in self-driving (self-driving), another processing device connected to a wireless modem, a vehicle-mounted device, a wearable device, a terminal in a 5G network, a terminal in a future evolved network, or the like.

In addition, the terminal may alternatively be a terminal in an internet of things (internet of things, IoT) system. An IoT is an important constituent part for development of a future information technology. A main technical feature of the IoT is to connect the thing to a network by using a communication technology, to implement a smart network with human-machine interconnection and thing-thing interconnection. A specific form of the terminal is not limited in this application.

It should be understood that, in embodiments of this application, the terminal may be an apparatus configured to implement a function of the terminal, or may be an apparatus that can support the terminal in implementing the function, for example, a chip system. The apparatus may be mounted in the terminal. In an embodiment of this application, the chip system may include a chip, or may include a chip and another discrete component.

In embodiments of this application, the access network device may be referred to as a network device. The network device in embodiments of this application may be any device with a wireless transceiver function. The device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (base band unit, BBU), an access point (access point, AP) in a wireless fidelity (wireless fidelity, Wi-Fi) system, wireless relay node, a wireless backhaul node, a transmission point (transmission point, TP), a transmission and reception point (transmission and reception point, TRP), or the like, may be a gNB in a 5G system, for example, an NR system, a transmission point (TRP or TP), or one antenna panel or one group of antenna panels (including a plurality of antenna panels) of a base station in a 5G system, or may be a network node that forms a gNB or a transmission point, for example, a baseband unit (BBU), a distributed unit (distributed unit, DU), or the like.

It should be understood that, in embodiments of this application, the network device may be an apparatus configured to implement a function of the network device, or may be an apparatus that can support the network device in implementing the function, for example, a chip system. The apparatus may be mounted in the network device. It may be understood that all or some of functions of the network device in this application may alternatively be implemented by using a software function running on hardware, or may be implemented by using an instantiated virtualization function on a platform (for example, a cloud platform).

It should be further understood that the network device and the terminal in embodiments of this application may be deployed on land, including indoor, outdoor, handheld, or vehicle-mounted deployment, may be deployed on a water surface, or may be deployed on an airplane, a balloon, or a satellite in the air. Application scenarios of the network device and the terminal are not limited in embodiments of this application.

The technical solutions in embodiments of this application may be applied to various communication systems, for example, a 5th generation (5th generation, 5G) system or a future evolved communication system, and vehicle-to-everything (vehicle-to-X V2X). V2X may include vehicle-to-network (vehicle-to-network, V2N), vehicle-to-vehicle (vehicle-to-vehicle, V2V), vehicle-to-infrastructure (vehicle-to-infrastructure, V2I), vehicle-to-pedestrian (vehicle-to-pedestrian, V2P), long term evolution-vehicle (long term evolution-vehicle, LTE-V), an internet of vehicles, machine type communication (machine type communication, MTC), an internet of things (Internet of things, IoT), long term evolution-machine (long term evolution-machine, LTE-M), a machine-to-machine (machine-to-machine, M2M), device-to-device (device-to-device, D2D), and the like.

Before the data transmission method and the data transmission apparatus that are provided in embodiments of this application are described, the following statements are first provided.

First, in the following embodiments, terms and English acronyms and abbreviations, for example, a service frame, a delay jitter, a burst length, a CG resource, and a DRX parameter, are all examples provided for ease of description, and shall not constitute any limitation on this application. This application does not exclude a possibility of defining another term that can implement a same or similar function in an existing or a future protocol. Second, the terms "first", "second", and various numbers in the following embodiments are merely used for differentiation for ease of description, and are not intended to limit the scope of embodiments of this application. For example, the terms are for differentiating between different indication information.

Third, "at least one" means one or more, and "a plurality" of means two or more. "And/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between associated objects. "At least one of the following items (pieces)" or a similar expression thereof indicates any combination of these items, including a single item (piece) or any combination of plural items (pieces). For example, at least one of a, b, and c may indicate a, b, c, a and b, a and c, b and c, or a, b, and c, where a, b, and c may be singular or plural.

It should be understood that the data transmission method provided in embodiments of this application may be for transmitting another service frame that has a same delay jitter feature or burst length feature as the XR service. This is not limited in embodiments of this application. The following provides descriptions by using an example in which a service frame is an XR service frame.

FIG. 15 is a schematic flowchart of a data transmission method 1500 according to an embodiment of this application. The method 1500 may be applied to the scenario architecture 100, the scenario architecture 200, or the scenario architecture 300. However, this is not limited in embodiments of this application. In FIG. 15, an example in which a network device and a terminal are used as execution bodies of the interaction example is for illustrating the method. However, the execution bodies of the interaction example are not limited in this application. For example, the network device in FIG. 15 may alternatively be a chip, a chip system, or a processor that supports the network device in implementing the method, or may be a logical module or software that can implement all or some of functions of the network device. The terminal in FIG. 15 may alternatively be a chip, a chip system, or a processor that supports the terminal in implementing the method, or may be a logical module or software that can implement all or some of functions of the terminal. The method 1500 includes the following steps.

S1501: The terminal sends first indication information to the network device. The first indication information indicates a statistical parameter of a delay jitter of an arrival time of a service frame or a statistical parameter of a burst length of a service frame. The burst length is duration corresponding to all data packets of the service frame. The statistical parameter of the delay jitter or the statistical parameter of the burst length is for determining a DRX parameter and/or a CG resource. Correspondingly, the network device receives the first indication information.

An uplink service mode of the XR service frame may be determined by an application on the terminal. The terminal may know a service flow generation mode, and may obtain, through statistics collection, a statistical parameter of a delay jitter or a statistical parameter of a burst length within a historical time period.

It should be understood that, for a same terminal, the delay jitter or the burst length caused by encoding processing and the like performed by the terminal within the historical time period is stable. Therefore, the statistical parameter of the delay jitter or the statistical parameter of the burst length within the historical time period obtained through statistics collection has generality, and may be sent to the network device as reference data for configuring a DRX parameter and/or a CG resource.

It should be understood that the arrival time of the service frame may be a time at which the service frame arrives at a radio link control (radio link control, RLC) layer of the terminal. RLC is mainly for controlling a radio link, and providing a reliable link for communication between the terminal and the network device. Further, the arrival time of the service frame may be a time at which the service frame arrives at a buffer (buffer) at the RLC layer of the terminal.

It should be further understood that the burst length of the service frame may be understood as corresponding duration from arrival of a 1st data packet to arrival of a last data packet of the service frame at the RLC layer.

S1502: The network device sends second indication information to the terminal. The second indication information indicates the DRX parameter and/or the CG resource. The DRX parameter and/or the CG resource are/is determined based on the first indication information. Correspondingly, the terminal receives the second indication information.

The network device may determine, based on the statistical parameter of the delay jitter indicated by the first indication information, the DRX parameter and/or the CG resource that are/is required for transmitting an XR service. Alternatively, the network device determines, based on the statistical parameter of the burst length indicated by the first indication information, the DRX parameter and/or the CG resource that are/is required for transmitting an XR service.

S1503: The terminal and the network device communicate the service frame based on the DRX parameter and/or the CG resource.

In embodiments of this application, the network device can determine, for the terminal based on the statistical parameter of the delay jitter or the statistical parameter of the burst length sent by the terminal, the DRX parameter or the CG resource required for transmitting the XR service. The DRX parameter and/or the CG resource that are/is configured in this manner are/is applicable to transmission of an XR service frame having a delay jitter or a burst length. This helps reduce a transmission delay of the XR service frame.

In an optional embodiment, the first indication information is included in the UAI. UAI specified in an existing protocol includes a DRX parameter of a user. In this application, a field related to the statistical parameter of the delay jitter and/or a field related to the jitter parameter of the burst length may be added to a field that describes the DRX parameter in the UAI. The network device may configure an appropriate DRX parameter and/or an appropriate CG resource for the terminal based on the statistical parameter of the delay jitter and/or the jitter parameter of the burst length in the added field. In this way, the existing protocol is used, and implementation is easy.

In an optional embodiment, the statistical parameter of the delay jitter includes a distribution parameter of the delay jitter.

In a possible implementation, the distribution parameter of the delay jitter may be a parameter of a specific distribution type. For example, the distribution type may be a Gaussian distribution (or referred to as a normal distribution), an exponential distribution, a uniform distribution, or a Poisson distribution. At least one of a distribution shape, a distribution expectation, a distribution variance, or a distribution range is obtained based on the parameter of the specific distribution type.

It should be understood that a parameter of a known distribution type in embodiments of this application may be represented in a form of a mathematical expression.

For example, a distribution type of the delay jitter is the uniform distribution, and a mathematical expression of the known uniform distribution is as follows:

$$f(\text{x}) = \frac{1}{r-l}, l < x < r$$

Herein, *l* indicates a left boundary, namely, a lower limit, of the uniform distribution, and *r* indicates a right boundary, namely, an upper limit, of the uniform distribution. A shape indicating the distribution may be obtained based on the mathematical expression of the exponential distribution. For the exponential distribution, an expectation of is

$$\frac{l+r}{2}$$, a variance is $$\frac{(r-l)^2}{12}$$, and a range is [*l*, *r*].

For example, a distribution type of the delay jitter is the Gaussian distribution, and a mathematical expression of the known Gaussian distribution is as follows:

$$f(\mathrm{x}) = \frac{1}{\sqrt{2\pi\sigma}}\exp(-\frac{(\mathrm{x}-\mu)^2}{2\sigma^2})$$

Herein, $\mu$ indicates a location parameter of the Gaussian distribution, and determines a distribution location. $\sigma$ indicates a scale parameter of the Gaussian distribution, and determines a distribution amplitude. A shape of the Gaussian distribution may be obtained based on the data expression of the Gaussian distribution. An expectation of the Gaussian distribution is $\mu$, a variance of the Gaussian distribution is $\sigma^2$, and a range of the Gaussian distribution may be represented as [$\mu$-$\sigma$, $\mu$+$\sigma$].

For example, the Gaussian distribution is a truncated Gaussian distribution, and the truncated Gaussian distribution is a distribution that limits a value range of a variable x. In addition to the parameter $\mu$ and the parameter $\sigma$, the truncated Gaussian distribution further includes a truncated lower limit a and a truncated upper limit b, that is, a value of the variable x is limited to be between a and b. In this case, for the truncated Gaussian distribution, a range is a truncated range [a, b], an expectation is $\mu$, and a variance is $\sigma^2$.

For example, when sending the distribution parameter of the delay jitter to the network device, the terminal may transmit the parameter of the distribution type in terms of an agreed ASCII code. After receiving the ASCII code, the network device decodes the ASCII code to obtain the mathematical expression of the distribution type, to obtain, based on the mathematical expression, at least one of the distribution shape, the distribution expectation, the distribution variance, or the distribution range.

The foregoing describes the distribution parameter of the delay jitter by using the uniform distribution and the Gaussian distribution as examples. The at least one of the distribution shape, the distribution expectation, the distribution variance, or the distribution range may alternatively be determined based on a parameter of another distribution type. This is not limited in embodiments of this application.

In another possible implementation, the distribution parameter of the delay jitter may include at least one of a mean value, a variance, or a range. In this implementation, optionally, the terminal and the network device may negotiate an index of the distribution type. For example, the index of the distribution type is shown in Table 1.

**Table 1**

| Index | Distribution type |
|---|---|
| 0 | Gaussian distribution |
| 1 | Exponential distribution |
| 2 | Uniform distribution |
| 3 | Poisson distribution |
| ... | ... |

For example, the terminal may add a JitterRelatedInformation field to the UAI message in RRC signaling. The added field indicates the statistical parameter of the delay jitter within the historical time period. UAI message to which the JitterRelatedInformation field is added is as follows:

```
UEAssistanceInformation ::=              SEQUENCE {
    criticalExtensions                       CHOICE {
        ueAssistanceInformation                  UEAssistanceInformation-IEs,
        criticalExtensionsFuture                 SEQUENCE {}
    }
}
DelayBudgetReport::=                      CHOICE {
    type1                                    ENUMERATED {
        msMinus160, msMinus80, msMinus60, msMinus40,
                                             msMinus20, ms0, ms20, ms40,
ms60, ms80, ms160, ms320, ms640, ms1280},
        ...
}
JitterRelatedInformation ::= SEQUENCE {
    JitterMean                    BIT STRING (SIZE (4))    OPTIONAL,
    JitterMinRange                BIT STRING (SIZE (4))    OPTIONAL,
    JitterMaxRange                BIT STRING (SIZE (4))    OPTIONAL,
    JitterStd                     BIT STRING (SIZE (4))    OPTIONAL,
    JitterDistribution            BIT STRING (SIZE (4))    OPTIONAL,
    ...
}
```

JitterMean indicates a mean value of the delay jitter. JitterMinRange indicates a minimum range of the delay jitter. JitterMinRange indicates a maximum range of the delay jitter. JitterStd indicates a variance of the delay jitter. JitterDistribution indicates the index of the distribution type of the delay jitter.

The following provides descriptions by using, as an example, the implementation in which the distribution parameter of the delay jitter includes at least one of the mean value, the variance, or the range.

In an optional embodiment, the DRX parameter includes a start time offset of a DRX cycle and a monitoring occasion for a PDCCH within the DRX cycle. The start time offset of the DRX cycle is determined based on the statistical parameter of the delay jitter, a time corresponding to a start subframe of the DRX cycle, and an ideal arrival time of the service frame. The monitoring occasion for the PDCCH within the DRX cycle is determined based on the statistical parameter of the delay jitter.

The monitoring occasion within the DRX cycle may be continuous or non-continuous. When being continuous, the monitoring occasion for the PDCCH within the DRX cycle may include monitoring duration (on duration). When being non-continuous, the monitoring occasion for the PDCCH within the DRX cycle may include a monitoring interval slot (DRX interval slot).

It should be understood that the ideal arrival time of the service frame in embodiments of this application indicates a time at which the service frame cyclically arrives when there is no delay jitter.

The following describes an implementation of configuring the DRX parameter and the CG resource based on the statistical parameter of the delay jitter.

After receiving the first indication information, the network device obtains at least one of the mean value, the variance, or the range of the delay jitter, and configures the DRX parameter for the terminal.

For example, the network device obtains the range of the delay jitter. The range of the delay jitter is [Lrange, Rrange]. Lrange is a value corresponding to the JitterMinRange field. Rrange is a value corresponding to the JitterMin-Range field.

The following specifically describes two possible implementations of configuring the DRX parameter based on the statistical parameter of the delay jitter.

Implementation A1: The DRX parameter that needs to be configured include the start time offset (DRX start offset) of the DRX cycle and the monitoring duration (on duration) of the DRX cycle.

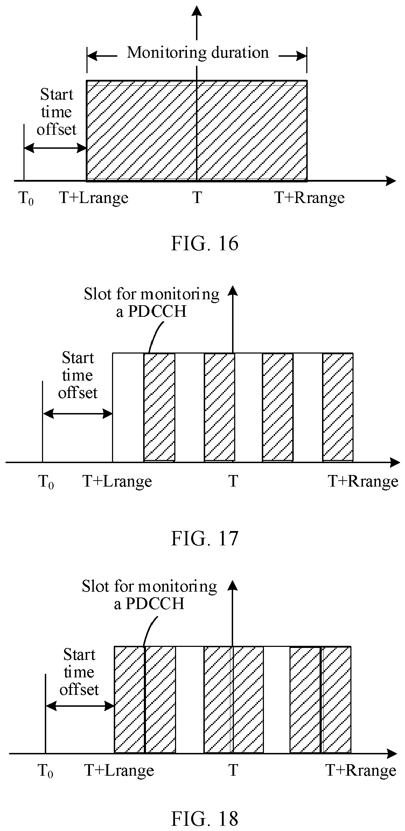

FIG. 16 is a diagram of configuring the DRX monitoring duration according to an embodiment of this application. For example, a moment corresponding to the start subframe of the DRX cycle is $T_0$, and T is an ideal arrival moment of the XR service, namely, a cyclical arrival moment. The network device may obtain, through calculation, the start time offset (DRX start offset) and the monitoring duration (on duration) of the DRX cycle according to the following formulas:

$$\text{on duration} = \text{Rrange} - \text{Lrange}$$

$$\text{DRX start offset} = T + \text{Lrange} - T_0$$

For example, the range of the delay jitter is [-2 ms, 2 ms]. In this case, on duration timer=2-(-2)=4 ms, corresponding to four subframes.

Implementation A2: The DRX parameter that needs to be configured include the start time offset (DRX start offset) of the DRX cycle and the monitoring interval slot (DRX interval slot) of the DRX cycle. This may also be considered as configuring a pattern of the DRX cycle.

FIG. 17 is a diagram of configuring a DRX pattern according to an embodiment of this application. A shadow part in FIG. 17 indicates a slot for monitoring the PDCCH. For example, the moment corresponding to the start subframe of the DRX cycle is $T_0$, and T is the ideal arrival moment of the XR service. A larger time domain resource interval for monitoring the PDCCH within the DRX cycle indicates a longer delay of the XR service. A smaller time domain resource interval for monitoring the PDCCH indicates more time domain resources on which the terminal needs to monitor the PDCCH, and indicates higher power consumption that is caused. Therefore, to reduce the transmission delay of the XR service and power consumption of the terminal as much as possible, the network device may configure the DRX pattern at an equal time domain interval within the range of the delay jitter.

For example, the range of the delay jitter in the statistical parameter is [-4 ms, 4 ms]. To reduce a loss, a monitoring interval slot may be set to one slot in a range of eight slots of the delay jitter. To be specific, the PDCCH is monitored once every other slot, and monitoring duration is one slot. In this way, the PDCCH needs to be monitored only within four of the eight slots. This helps reduce the power consumption of the terminal. In addition, to avoid a case in which a current XR service misses a current DRX cycle, the PDCCH may be always monitored within a slot corresponding to T+Rrange-1 to T+Rrange. In this way, if the XR service arrives within the slot corresponding to T+Rrange-1 to T+Rrange, the XR service may also be transmitted within the current cycle. This helps reduce the transmission delay of the XR service.

A manner of configuring the start time offset (DRX start offset) is similar to that in the Implementation A1. Details are not described herein again.

It should be understood that, in embodiments of this application, an example in which the monitoring interval slot is one slot is used for description. To reduce the power consumption, the monitoring interval slot may be further increased to monitor the PDCCH. This is not limited in embodiments of this application.

FIG. 18 is another diagram of configuring the DRX pattern according to an embodiment of this application. As shown in FIG. 18, a shadow part indicates the slot for monitoring the PDCCH. For example, the range of the delay jitter in the statistical parameter is [-4 ms, 4 ms]. The shadow part in FIG. 18 indicates the slot for monitoring the PDCCH. It can be learned that the network device may set the monitoring interval slot to one slot through configuration, but monitoring is continuously performed each time within two slots.

It should be understood that the configured DRX pattern may be various. For example, the monitoring interval slot may alternatively be set to two slots through configuration, and the monitoring duration at a time may set to two slots through configuration. The configured DRX pattern is not limited in embodiments of this application.

After configuring the DRX parameter based on the statistical parameter of the delay jitter, the network device may send, to the terminal by using RRC signaling, the DRX parameter, for example, the start time offset of the DRX cycle and the monitoring occasion within the DRX cycle. If the network device sends, to the terminal, the DRX monitoring interval slot (DRX interval slot) configured in Implementation A2, a drx-IntervalSlot field may be added to a DRX configuration (DRX-Config) message in RRC signaling, to indicate the monitoring interval slot of the DRX cycle. A DRX configuration message to which the drx-IntervalSlot field is added is as follows:

```
DRX-Config ::=    SEQUENCE {

    drx-onDurationTimer      CHOICE {

            subMilliSeconds INTEGER (1..31),

            milliSeconds      ENUMERATED {

            ms1, ms2, ms3, ms4, ms5, ms6, ms8, ms10, ms20, ms30, ms40, ms50,
ms60,

            ms80, ms100, ms200, ms300, ms400, ms500, ms600, ms800, ms1000,
ms1200,

            ms1600, spare8, spare7, spare6, spare5, spare4, spare3, spare2, spare1}
            },
    drx-InactivityTimer      ENUMERATED {

            ms0, ms1, ms2, ms3, ms4, ms5, ms6, ms8, ms10, ms20, ms30, ms40, ms50, ms60,
ms80,

            ms100, ms200, ms300, ms500, ms750, ms1280, ms1920, ms2560, spare9, spare8,

            spare7, spare6, spare5, spare4, spare3, spare2, spare1},

    drx-IntervalSlot   ENUMERATED { INTEGER (1..32) }
```

After receiving the DRX parameter in the RRC signaling, the terminal monitors the PDCCH based on the configured monitoring occasion, and transmits the XR service after detecting the PDCCH.

The foregoing describes a process in which the network device configures the DRX parameter based on the range of the delay jitter in the statistical parameter. In addition, the network device may alternatively configure the DRX parameter based on the mean value or the variance of the delay jitter.

For example, if the mean value of the delay jitter obtained by the network device is -1 ms, it indicates that the arrival time of the XR service within the historical time period is usually advanced by one slot. When configuring the monitoring duration of the DRX cycle for the terminal based on an existing mechanism, the network device may advance the to-be-configured DRX monitoring duration by one slot.

For example, if the mean value of the delay jitter obtained by the network device is 1 ms, it indicates that the arrival time of the XR service within the historical time period is usually delayed by one slot. When configuring the monitoring duration of the DRX cycle for the terminal based on an existing mechanism, the network device may delay the to-be-configured DRX monitoring duration by one slot.

For example, if the variance of the delay jitter obtained by the network device is small, it indicates that the arrival time of the XR service within the historical time period is usually stable, and the range of the delay jitter is small. Therefore, the network device may configure shorter monitoring duration, for example, configure two slots or three slots, of the DRX cycle for the terminal.

For example, if the variance of the delay jitter obtained by the network device is large, it indicates that the arrival time of the XR service within the historical time period usually has a great fluctuation, and the range of the delay jitter is large. Therefore, the network device may configure longer monitoring duration, for example, configure 10 slots or 12 slots, of the DRX cycle for the terminal.

In addition, if the terminal sends the mean value, the variance, and the range of the delay jitter to the network device by using the UAI, the network device may configure, based on the mean value, the variance, and the range of the delay jitter, a more accurate DRX parameter applicable to transmission of the XR service.

In an optional embodiment, the CG resource includes a time domain resource. A quantity of time domain resources is determined based on the statistical parameter of the delay jitter and the ideal arrival time of the service frame.

The following specifically describes an implementation of determining the CG resource based on the statistical parameter of the delay jitter.

The terminal indicates the statistical parameter of the delay jitter of the arrival time of the service frame by using the first indication information. For example, the statistical parameter of the delay jitter may include the range of the delay jitter. It is assumed that the range of the delay jitter obtained through statistics collection within the historical time period is [-2 ms, 2 ms]. The terminal may send the range [-2 ms, 2 ms] of the delay jitter to the network device.

It should be understood that a manner in which the terminal sends the statistical parameter of the delay jitter to the network device is described above. Details are not described herein again.

After receiving the first indication information, the network device obtains at least one of the mean value, the variance, or the range of the delay jitter, and configures the CG resource for the terminal.

For example, the network device obtains the range of the delay jitter. The following specifically describes two possible implementations of configuring the CG resource based on the statistical parameter of the delay jitter.

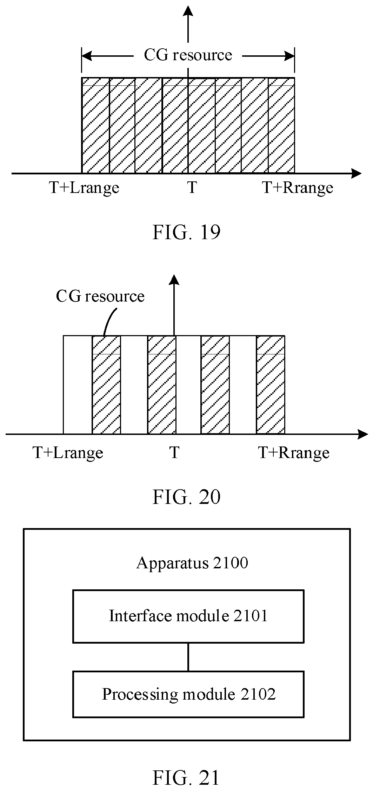

Implementation B 1: It is assumed that the range of the delay jitter sent by the terminal is [Lrange, Rrange]. FIG. 19 is a diagram of configuring the CG resource according to an embodiment of this application. As shown in FIG. 19, the CGtime domain resource configured by the network device based on the range [Lrange, Rrange] of the delay jitter includes [T+Lrange, T+Rrange]. T indicates the ideal arrival moment of the XR service. If the CGtime domain resource is mapped to a slot, and it is assumed that a length of one slot is a slot, a range of the configured CG time domain resource is from (T+Lrange)/slot to (T+Rrange)/slot. Then, a quantity of configured CG time domain resources may be known.

Implementation B2: It is assumed that the range of the delay jitter sent by the terminal is [Lrange, Rrange]. The network device allocates the CG resource at an equal slot interval within the range [Lrange, Rrange] of the delay jitter based on the range [Lrange, Rrange] of the delay jitter. A larger time domain interval within the CG cycle results in a longer transmission delay of the XR service and fewer occupied CG resources. Denser time domain resources within the CG cycle indicate a shorter transmission delay of the XR service but more occupied CG resources.

FIG. 20 is another diagram of configuring the CG resource according to an embodiment of this application. A shadow part in FIG. 20 indicates the CG resource that may be for transmitting the XR service. As shown in FIG. 20, to avoid a case in which the current XR service misses a current CG cycle, the network device always configures the CG resource within the slot corresponding to T+Rrange-1 to T+Rrange, and a time domain interval within the CG cycle configured by the network device is one slot.

It should be understood that, in this embodiment of this application, that the time domain interval within the CG cycle is one slot is used as an example. To save a resource, the time domain interval within the CG cycle may be further appropriately increased. To reduce the transmission delay of the XR service, the time domain interval within the CG cycle may be appropriately reduced. This is not limited in embodiments of this application.

After configuring the CG resource, the network device may send the CG resource to the terminal by using RRC signaling. For example, a cg-IntervalSlot field may be added to a configured grant configuration (ConfiguredGrantConfig) message in existing RRC signaling, to indicate a time domain interval within a CG cycle.

After receiving a CG resource configuration in the RRC signaling, the terminal transmits the XR service based on the configured CG resource.

It should be understood that, that the terminal transmits the XR service based on the DRX parameter may be considered as dynamic uplink scheduling, and the terminal may transmit the XR service after detecting the PDCCH from the network device. However, that the terminal transmits the XR service based on the CG resource may be considered as cyclical uplink scheduling, and the terminal transmits the XR service within the CG cycle based on the configured CG resource. The terminal may transmit the XR service based on both the DRX parameter and the CG resource, or may separately transmit the XR service based on the DRX parameter and the CG resource. This is not limited in embodiments of this application.

The foregoing describes a process in which the network device configures the CG resource based on the range of the delay jitter in the statistical parameter. In addition, the network device may alternatively configure the CG resource based on the mean value or the variance of the delay jitter.

For example, if the mean value of the delay jitter obtained by the network device is -1 ms, it indicates that the arrival time of the XR service within the historical time period is usually advanced by one slot. When configuring the CG time domain resource for the terminal based on an existing mechanism, the network device may advance the to-be-configured CG resource by one slot.

For example, if the mean value of the delay jitter obtained by the network device is 1 ms, it indicates that the arrival time of the XR service within the historical time period is usually delayed by one slot. When configuring the CG time domain resource for the terminal based on an existing mechanism, the network device may delay the to-be-configured CG resource by one slot.

For example, if the variance of the delay jitter obtained by the network device is small, it indicates that the arrival time of the XR service within the historical time period is usually stable, and the range of the delay jitter is small. Therefore, the network device may configure fewer CG time domain resources, for example, configure two slots or three slots, for the terminal.

For example, if the variance of the delay jitter obtained by the network device is large, it indicates that the arrival time of the XR service within the historical time period usually has a great fluctuation, and the range of the delay jitter is large. Therefore, the network device may configure more CG time domain resources, for example, configure 10 slots or 12 slots, for the terminal.

In addition, if the terminal sends the mean value, the variance, and the range of the delay jitter to the network device by using the UAI, the network device may configure, based on the mean value, the variance, and the range of the delay jitter, a more accurate CG resource applicable to transmission of the XR service.

The following specifically describes an implementation of configuring the CG resource based on the statistical parameter of the burst length.

In an optional embodiment, the statistical parameter of the burst length includes a distribution parameter of the burst length.

It should be understood that, similar to the distribution parameter of the delay jitter, in a possible implementation, the distribution parameter of the burst length may also be a parameter of the specific distribution type. At least one of a mean value, a variance, or a range of the burst length may be further determined based on the parameter of the distribution type. A specific determining method is described above. Details are not described herein again.

In another possible implementation, the distribution parameter of the burst length may also include at least one of a mean value, a variance, or a range.

The terminal indicates the statistical parameter of the burst length of the arrival time of the service frame by using the first indication information, and the terminal may send the statistical parameter of the delay jitter to the network device.

For example, the terminal may add a BurstLengthRelatedInformation field to the UAI message in the RRC signaling. The added field indicates the statistical parameter of the burst length within the historical time period. UAI message obtained after addition is as follows:

```
UEAssistanceInformation ::=          SEQUENCE {
    criticalExtensions                   CHOICE {
        ueAssistanceInformation              UEAssistanceInformation-IEs,
        criticalExtensionsFuture             SEQUENCE {}
    }
}
DelayBudgetReport::=                 CHOICE {
    type1                                ENUMERATED {
                                             msMinus1280,    msMinus640,
msMinus320, msMinus160, msMinus80, msMinus60, msMinus40,
```

```
                                                        msMinus20, ms0, ms20, ms40,

        ms60, ms80, ms160, ms320, ms640, ms1280},

                       ...

               }

               BurstLengthRelatedInformation ::= SEQUENCE {

               BurstLengthMean              BIT STRING (SIZE (4))      OPTIONAL,

               BurstLengthMinRange          BIT STRING (SIZE (4))      OPTIONAL,

               BurstLengthMaxRange          BIT STRING (SIZE (4))      OPTIONAL,

               BurstLengthStd               BIT STRING (SIZE (4))      OPTIONAL,

               BurstLengthDistribution      BIT STRING (SIZE (4))      OPTIONAL,

               ...

               }
```

BurstLengthMean indicates the mean value of the burst length. BurstLengthMinRange indicates a minimum range of the burst length. BurstLengthMaxRange indicates a maximum range of the burst length. BurstLengthStd indicates the variance of the burst length. BurstLengthDistribution indicates an index of a distribution type of the burst length.

After receiving the first indication information, the network device obtains at least one of the mean value, the variance, or the range of the burst length, and configures the CG resource for the terminal.

In an optional embodiment, the CG resource includes a time domain resource. A quantity of time domain resources is determined based on the statistical parameter of the burst length and an arrival time of the data packet of the service frame.

The data packet of the service frame in embodiments of this application may be one data packet, or may be a plurality of data packets. This is not limited in embodiments of this application.

For example, the network device obtains a mean value mean of the burst length, and the network device may set the CG time domain resource to [T, T+mean] through configuration. For example, T may be an arrival time of a 1st data packet of the current XR service. If the CG time domain resource is mapped to the slot, it is assumed that a length of a slot is a slot, a range of the allocated CG time domain resource is from T/slot to (T+mean)/slot.

For example, T may alternatively be an arrival time of any one of the first m data packets of the current XR service. To reduce the delay, the CG time domain resource may be configured based on an arrival time of a front data packet as much as possible.

For example, when there are a plurality of data packets in the service frame, a plurality of data packets may arrive at a same moment. In this case, T may be understood as an arrival time of the plurality of data packets of the current XR service.

For example, the mean value mean of the burst length=2 ms, and T=0. When a subcarrier spacing is 30 kHz, slot=0.5 ms. In this case, the CG time domain resource includes five slots in total from a 0th slot to a 4th slot.

After configuring the CG time domain resource, the network device may send the CG resource to the terminal by using RRC signaling. For example, a cg-NrofSlot field may be added to a configured grant configuration (ConfiguredGrantConfig) message in existing RRC signaling, to indicate a quantity of slots (slots) transmitted within one CG cycle. Other parameters such as the CG cycle may be configured based on existing RRC signaling. Details are not described herein in embodiments of this application.

After receiving the RRC signaling and obtaining a CG resource configuration, the terminal transmits the XR service based on the CG resource.

n an optional embodiment, the CG resource further includes a frequency domain resource. The first indication information further indicates a data amount of the service frame. A quantity of frequency domain resources is determined based on the quantity of time domain resources and the data amount of the service frame.

In embodiments of this application, the quantity of frequency domain resources can be determined based on the quantity of time domain resources and the data amount of the service frame. For example, the data amount of the service frame is 10 bits (bits), and the quantity of time domain resources is 5 slots (slots). In this case, a 2-bit frequency domain resource that may be allocated to each slot may be obtained based on 10/5=2.

It should be understood that, in embodiments of this application, the frequency domain resource may be configured when the quantity of time domain resources is already configured. In this way, a manner of preferably considering the CG time domain resource helps reduce the transmission delay of the XR service.

For example, the data amount of the service frame may be a data amount of each frame. In embodiments of this application, frame information is defined. The frame information may include the data amount of each frame. The terminal may indicate the frame information, that is, indicate the data amount of each frame, by using the first indication information. The frame information may also include a data rate and a frame rate. The terminal may indicate the frame information, that is, indicate the data rate and the frame rate, by using the first indication information. The data amount of each frame may be obtained based on the data rate and the frame rate, that is, the data amount of each frame=the data rate/the frame rate.

In embodiments of this application, a flow rate=the data amount of each frame/the burst length. Optionally, the terminal may send, to the network device by using the UAI, at least two of the frame information, the statistical parameter of the burst length within the historical time period, and the flow rate, and may obtain another parameter based on two parameters. The flow rate may also be referred to as a burst service rate, namely, a burst data rate of the service frame.

For example, during transmission of an uplink AR video, a flow rate Y=10 Mbps, a frame rate X=60 fps, and a mean value in a statistical parameter of a burst length is 2 ms. In this case, a data amount D of each frame=10 Mbps/60 fps=0.167 M. The terminal may send, to the network device by using the UAI, the data amount D=0.167 M of each frame and the mean value being 2 ms in the statistical parameter of the burst length. The network device may determine a quantity of CG time domain resources and a quantity of frequency domain resources based on the data amount D=0.167 M of each frame and the mean value being 2 ms in the statistical parameter of the burst length.

For example, BurstLengthRelatedInformation, FrameInformation, and FlowRate may be added to a UEAssistanceInformation message in RRC signaling. The following shows a UEAssistanceInformation message to which fields are added:

```
UEAssistanceInformation ::=          SEQUENCE {
        criticalExtensions                   CHOICE {
                ueAssistanceInformation              UEAssistanceInformation-IEs,
                criticalExtensionsFuture             SEQUENCE {}
        }
}
DelayBudgetReport::=                  CHOICE {
        type1                                ENUMERATED {
                                                     msMinus1280,   msMinus640,
msMinus320, msMinus160, msMinus80, msMinus60, msMinus40,
                                                     msMinus20, ms0, ms20, ms40,
ms60, ms80, ms160, ms320, ms640, ms1280},
                ...
        }
BurstLengthRelatedInformation ::= SEQUENCE {
        BurstLengthMean                      BIT STRING (SIZE (4))       OPTIONAL,
        BurstLengthMinRange                  BIT STRING (SIZE (4))       OPTIONAL,
        BurstLengthMaxRange                  BIT STRING (SIZE (4))       OPTIONAL,
        BurstLengthStd                       BIT STRING (SIZE (4))       OPTIONAL,
        BurstLengthDistribution              BIT STRING (SIZE (4))       OPTIONAL,
        ...
}
FrameInformation ::= SEQUENCE {
        FrameSize                            BIT STRING (SIZE (32))     OPTIONAL,
        FrameRate                            BIT STRING (SIZE (8))      OPTIONAL,
        DataRate                             BIT STRING (SIZE (32))     OPTIONAL,
        FlowRate                             BIT STRING (SIZE (32))     OPTIONAL,
        ...
}
```

FrameSize indicates the data amount of each frame, FrameRate indicates the frame rate, DataRate indicates the data rate, and FlowRate indicates the flow rate.

It should be understood that sequence numbers of the foregoing processes do not mean execution sequences. The execution sequences of the processes should be determined based on functions and internal logic of the processes, and should not be construed as any limitation on the implementation processes of embodiments of this application.

The foregoing describes the method embodiments in embodiments of this application with reference to the accompanying drawings. The following describes apparatus embodiments in embodiments of this application. It may be understood that the descriptions of the method embodiments and the descriptions of the apparatus embodiments may correspond to each other. Therefore, for a part that is not described, refer to the foregoing method embodiments.

It may be understood that, in the foregoing method embodiments, a method and an operation implemented by the network device may alternatively be implemented by a component (for example, a chip or a circuit) that can be used in the network device, and a method and an operation implemented by the terminal may alternatively be implemented by a component (for example, a chip or a circuit) that can be used in the terminal.

The foregoing mainly describes the solutions provided in embodiments of this application from a perspective of interaction between network elements. It may be understood that, to implement the foregoing functions, each network element like a transmit end device or a receive end device includes a corresponding hardware structure and/or software module for performing each function. A person skilled in the art should be aware that nits and algorithm steps in the examples described with reference to embodiments disclosed in this specification can be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the transmit end device or the receive end device may be divided into functional modules based on the foregoing method examples. For example, the functional modules may be obtained through division based on corresponding functions, or two or more functions may be integrated into one processing module. The integrated module may be implemented in a form of hardware, or may be implemented in a form of a software functional module. It should be noted that division into the modules in embodiments of this application is an example, is merely logical function division, and may be other division during actual implementation. The following provides descriptions by using an example in which the functional modules are obtained through division based on the functions.

FIG. 21 is a block diagram of a data transmission apparatus 2100 according to an embodiment of this application. The apparatus 2100 includes an interface module 2101 and a processing module 2102.

The interface module 2101 is configured to: receive first indication information from a terminal, where the first indication information indicates a statistical parameter of a delay jitter of an arrival time of a service frame or a statistical parameter of a burst length of a service frame, the burst length is duration corresponding to all data packets of the service frame, and the statistical parameter of the delay jitter or the statistical parameter of the burst length is for determining a DRX parameter and/or a CG resource; and send second indication information to the terminal, where the second indication information indicates the DRX parameter and/or the CG resource, and the DRX parameter and/or the CG resource are/is determined based on the first indication information. The processing module 2102 is configured to control the apparatus 2100 to communicate the service frame with the terminal based on the DRX parameter and/or the CG resource.

Optionally, the DRX parameter includes a start time offset of a DRX cycle and a monitoring occasion for a PDCCH within the DRX cycle. The start time offset of the DRX cycle is determined based on the statistical parameter of the delay jitter, a time corresponding to a start subframe of the DRX cycle, and an ideal arrival time of the service frame. The monitoring occasion for the PDCCH within the DRX cycle is determined based on the statistical parameter of the delay jitter.

Optionally, the CG resource includes a time domain resource. A quantity of time domain resources is determined based on the statistical parameter of the delay jitter and the ideal arrival time of the service frame.

Optionally, the statistical parameter of the delay jitter includes a distribution parameter of the delay jitter.

Optionally, the CG resource includes a time domain resource. A quantity of time domain resources is determined based on the statistical parameter of the burst length and an arrival time of the data packet of the service frame.

Optionally, the CG resource further includes a frequency domain resource. The first indication information further indicates a data amount of the service frame. A quantity of frequency domain resources is determined based on the quantity of time domain resources and the data amount of the service frame.

Optionally, the statistical parameter of the burst length includes a distribution parameter of the burst length.

Optionally, the first indication information is included in UAI.

In an optional example, a person skilled in the art may understand that the apparatus 2100 may be specifically the network device in the foregoing embodiments, or functions of the network device in the foregoing embodiments may be integrated into the apparatus 2100. The functions may be implemented by hardware, or may be implemented by hardware executing corresponding software. The hardware or the software includes one or more modules corresponding to the functions. For example, the interface module 2101 may be a communication interface, for example, a transceiver interface. The apparatus 2100 may be configured to perform procedures and/or steps corresponding to the network device in the foregoing method embodiments.

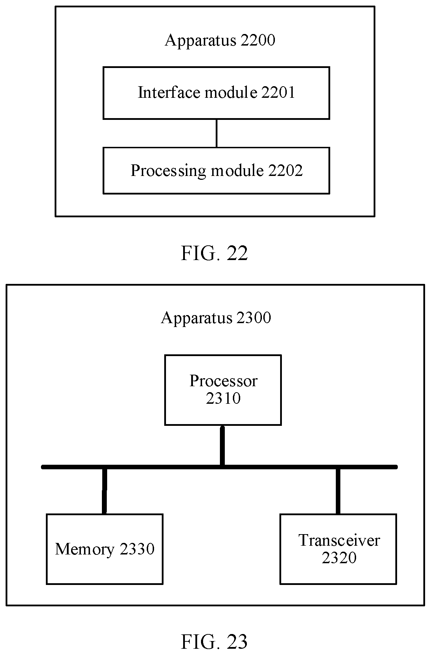

FIG. 22 is a block diagram of another data transmission apparatus 2200 according to an embodiment of this application. The apparatus 2200 includes an interface module 2201 and a processing module 2202.

The interface module 2201 is configured to: send first indication information to a network device, where the first indication information indicates a statistical parameter of a delay jitter of an arrival time of a service frame or a statistical parameter of a burst length of a service frame, the burst length is duration corresponding to all data packets of the service frame, and the statistical parameter of the delay jitter or the statistical parameter of the burst length is for determining a DRX parameter and/or a CG resource; and receive second indication information from the network device, where the second indication information indicates the DRX parameter and/or the CG resource. The processing module 2202 is configured to control the apparatus 2200 to communicate the service frame with the network device based on the DRX parameter and/or the CG resource.

Optionally, the statistical parameter of the delay jitter includes a distribution parameter of the delay jitter.

Optionally, the statistical parameter of the burst length includes a distribution parameter of the burst length.

Optionally, the first indication information is included in UAI.

In an optional example, a person skilled in the art may understand that the apparatus 2200 may be specifically the terminal in the foregoing embodiments, or functions of the terminal in the foregoing embodiments may be integrated into the apparatus 2200. The functions may be implemented by hardware, or may be implemented by hardware executing corresponding software. The hardware or the software includes one or more modules corresponding to the functions. For example, the interface module 2201 may be a communication interface, for example, a transceiver interface. The apparatus 2200 may be configured to perform procedures and/or steps corresponding to the terminal in the foregoing method embodiments.

It should be understood that the apparatus 2100 and the apparatus 2200 herein are embodied in a form of functional modules. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a combinational logic circuit, and/or another suitable component that supports the described functions.

In embodiments of this application, each of the apparatus 2100 and the apparatus 2200 may alternatively be a chip or a chip system, for example, a system on chip (system on chip, SoC). Correspondingly, the interface module 2201 may be a transceiver circuit of the chip. This is not limited herein.

FIG. 23 is a block diagram of still another data transmission apparatus 2300 according to an embodiment of this application. The apparatus 2300 includes a processor 2310, a transceiver 2320, and a memory 2330. The processor 2310, the transceiver 2320, and the memory 2330 communicate with each other through an internal connection path. The memory 2330 is configured to store instructions. The processor 2310 is configured to execute the instructions stored in the memory 2330, to control the transceiver 2320 to send a signal and/or receive a signal.

It should be understood that the apparatus 2300 may be specifically the network device or the terminal in the foregoing embodiments, or functions of the network device or the terminal in the foregoing embodiments may be integrated into the apparatus 2300, and the apparatus 2300 may be configured to perform the steps and/or procedures corresponding to the network device or the terminal in the foregoing method embodiments. Optionally, the memory 2330 may include a read-only memory and a random access memory, and provide instructions and data to the processor. Apart of the memory may further include a non-volatile random access memory. For example, the memory may further store information about a device type. The processor 2310 may be configured to execute the instructions stored in the memory. When the processor executes the instructions, the processor may perform the steps and/or procedures corresponding to the network device and the terminal in the foregoing method embodiments.

It should be understood that, in embodiments of this application, the processor 2310 may be a central processing unit (central processing unit, CPU), or the processor may be another general-purpose processor, a digital signal processor (DSP), an application-specific integrated circuit (ASIC), a field programmable gate array (FPGA) or another programmable logic device, a discrete gate or a transistor logic device, a discrete hardware component, or the like. The general-purpose processor may be a microprocessor, or the processor may be any conventional processor or the like.

In an implementation process, the steps of the foregoing methods may be completed by a hardware integrated logic circuit in the processor or by using instructions in a form of software. The steps of the methods disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory. The processor executes the instructions in the memory and completes the steps in the foregoing methods in combination with the hardware of the processor. To avoid repetition, details are not described herein again.

A person of ordinary skill in the art may be aware that modules and algorithm steps in the examples described with reference to embodiments disclosed in this specification may be implemented by electronic hardware or a combination of computer software and electronic hardware. Whether these functions are performed in a form of hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and module, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the modules is merely logical function division and may be other division during actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or the communication connections between the apparatuses or the modules may be implemented in electrical, mechanical, or other forms.

The modules described as separate parts may or may not be physically separate, and parts displayed as modules may or may not be physical modules, that is, may be located in one position, or may be distributed on a plurality of network modules. Some or all of the modules may be selected based on an actual requirement, to achieve the objectives of the solutions in embodiments.

In addition, functional modules in embodiments of this application may be integrated into one processing module, each of the modules may exist alone physically, or two or more modules are integrated into one module.

When being implemented in a form of a software functional module and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

**Claims**

1. A data transmission method, comprising:

   receiving first indication information from a terminal, wherein the first indication information indicates a statistical parameter of a delay jitter of an arrival time of a service frame or a statistical parameter of a burst length of a service frame, the burst length is duration corresponding to all data packets of the service frame, and the statistical parameter of the delay jitter or the statistical parameter of the burst length is for determining a discontinuous reception DRX parameter and/or a configured grant CG resource;
   sending second indication information to the terminal, wherein the second indication information indicates the DRX parameter and/or the CG resource, and the DRX parameter and/or the CG resource are/is determined based on the first indication information; and
   communicating the service frame with the terminal based on the DRX parameter and/or the CG resource.

2. The method according to claim 1, wherein the DRX parameter comprises a start time offset of a DRX cycle and a monitoring occasion for a physical downlink control channel PDCCH within the DRX cycle;

   the start time offset of the DRX cycle is determined based on the statistical parameter of the delay jitter, a time corresponding to a start subframe of the DRX cycle, and an ideal arrival time of the service frame; and
   the monitoring occasion for the PDCCH within the DRX cycle is determined based on the statistical parameter of the delay jitter.

3. The method according to claim 1 or 2, wherein the CG resource comprises a time domain resource; and
   a quantity of time domain resources is determined based on the statistical parameter of the delay jitter and the ideal arrival time of the service frame.

4. The method according to any one of claims 1 to 3, wherein the statistical parameter of the delay jitter comprises a distribution parameter of the delay jitter.

5. The method according to claim 1 or 2, wherein the CG resource comprises a time domain resource; and a quantity of time domain resources is determined based on the statistical parameter of the burst length and an arrival time of the data packet of the service frame.

6. The method according to claim 5, wherein the CG resource further comprises a frequency domain resource, and the first indication information further indicates a data amount of the service frame; and a quantity of frequency domain resources is determined based on the quantity of time domain resources and the data amount of the service frame.

7. The method according to claim 5 or 6, wherein the statistical parameter of the burst length comprises a distribution parameter of the burst length.

8. The method according to any one of claims 1 to 7, wherein the first indication information is comprised in user assistance information UAI.

9. A data transmission method, comprising:

sending first indication information to a network device, wherein the first indication information indicates a statistical parameter of a delay jitter of an arrival time of a service frame or a statistical parameter of a burst length of a service frame, the burst length is duration corresponding to all data packets of the service frame, and the statistical parameter of the delay jitter or the statistical parameter of the burst length is for determining a discontinuous reception DRX parameter and/or a configured grant CG resource; receiving second indication information from the network device, wherein the second indication information indicates the DRX parameter and/or the CG resource; and communicating the service frame with the network device based on the DRX parameter and/or the CG resource.

10. The method according to claim 9, wherein the statistical parameter of the delay jitter comprises a distribution parameter of the delay jitter.

11. The method according to claim 9 or 10, wherein the statistical parameter of the burst length comprises a distribution parameter of the burst length.

12. The method according to any one of claims 9 to 11, wherein the first indication information is comprised in user assistance information UAI.

13. A data transmission apparatus, comprising:

an interface module, configured to receive first indication information from a terminal, wherein the first indication information indicates a statistical parameter of a delay jitter of an arrival time of a service frame or a statistical parameter of a burst length of a service frame, the burst length is duration corresponding to all data packets of the service frame, and the statistical parameter of the delay jitter or the statistical parameter of the burst length is for determining a discontinuous reception DRX parameter and/or a configured grant CG resource; and the interface module is further configured to send second indication information to the terminal, wherein the second indication information indicates the DRX parameter and/or the CG resource, and the DRX parameter and/or the CG resource are/is determined based on the first indication information; and a processing module, configured to control the apparatus to communicate the service frame with the terminal based on the DRX parameter and/or the CG resource.

14. The apparatus according to claim 13, wherein the DRX parameter comprises a start time offset of a DRX cycle and a monitoring occasion for a physical downlink control channel PDCCH within the DRX cycle;

the start time offset of the DRX cycle is determined based on the statistical parameter of the delay jitter, a time corresponding to a start subframe of the DRX cycle, and an ideal arrival time of the service frame; and

the monitoring occasion for the PDCCH within the DRX cycle is determined based on the statistical parameter of the delay jitter.

15. The apparatus according to claim 13 or 14, wherein the CG resource comprises a time domain resource; and a quantity of time domain resources is determined based on the statistical parameter of the delay jitter and the ideal arrival time of the service frame.

16. The apparatus according to any one of claims 13 to 15, wherein the statistical parameter of the delay jitter comprises a distribution parameter of the delay jitter.

17. The apparatus according to claim 13 or 14, wherein the CG resource comprises a time domain resource; and a quantity of time domain resources is determined based on the statistical parameter of the burst length and an arrival time of the data packet of the service frame.

18. The apparatus according to claim 17, wherein the CG resource further comprises a frequency domain resource, and the first indication information further indicates a data amount of the service frame; and a quantity of frequency domain resources is determined based on the quantity of time domain resources and the data amount of the service frame.

19. The apparatus according to claim 17 or 18, wherein the statistical parameter of the burst length comprises a distribution parameter of the burst length.

20. The apparatus according to any one of claims 13 to 19, wherein the first indication information is comprised in user assistance information UAI.

21. A data transmission apparatus, comprising:

an interface module, configured to send first indication information to a network device, wherein the first indication information indicates a statistical parameter of a delay jitter of an arrival time of a service frame or a statistical parameter of a burst length of a service frame, the burst length is duration corresponding to all data packets of the service frame, and the statistical parameter of the delay jitter or the statistical parameter of the burst length is for determining a discontinuous reception DRX parameter and/or a configured grant CG resource; and the interface module is further configured to receive second indication information from the network device, wherein the second indication information indicates the DRX parameter and/or the CG resource; and a processing module, configured to control the apparatus to communicate the service frame with the network device based on the DRX parameter and/or the CG resource.

22. The apparatus according to claim 21, wherein the statistical parameter of the delay jitter comprises a distribution parameter of the delay jitter.

23. The apparatus according to claim 21 or 22, wherein the statistical parameter of the burst length comprises a distribution parameter of the burst length.

24. The apparatus according to any one of claims 21 to 23, wherein the first indication information is comprised in user assistance information UAI.

25. A communication apparatus, comprising a processor, wherein the processor is coupled to a memory, the memory is configured to store a program or instructions, and when the program or the instructions are executed by the processor, the apparatus is enabled to perform the method according to any one of claims 1 to 8, or the apparatus is enabled to perform the method according to any one of claims 9 to 12.

26. A computer-readable storage medium, configured to store a computer program, wherein the computer program comprises instructions for implementing the method according to any one of claims 1 to 8, or comprises instructions for implementing the method according to any one of claims 9 to 12.

27. A computer program product, wherein the computer program product comprises computer program code, and when the computer program code is run on a computer, the computer is enabled to implement the method according to any one of claims 1 to 8, or the computer is enabled to implement the method according to any one of claims 9 to 12.

28. A communication system, comprising the apparatus according to any one of claims 13 to 20 and the apparatus according to any one of claims 21 to 24.

FIG. 1

An average arrival cycle of an XR service is 1/fps

The average arrival cycle of the XR service is 1/fps

An arrival time of the XR service has a jitter

FIG. 2

First frame    Second frame    Third frame    Fourth frame    Fifth frame

Ideal arrival time

16.67 ms    16.67 ms    16.67 ms    16.67 ms

Actual arrival time

5 ms delayed

3 ms advanced

FIG. 3

Size of a
data packet

Burst length

Burst length

Time

Size of a
video frame

1/fps

Time

FIG. 4

Monitoring
duration

Opportunity time

DRX cycle

FIG. 5

Receive a
PDCCH

Monitoring
duration

Opportunity
time

Activity
period

DRX cycle

DRX cycle

FIG. 6

FIG. 7

FIG. 8

FIG. 9

FIG. 10

FIG. 11

Scenario architecture 100

| Server 110 | Data network 120 | Core network device 130 | Access network device 140 | Terminal 150 |

FIG. 12

Scenario architecture 200

| Terminal 201 | Access network device 202 | Core network device 203 | Access network device 204 | Terminal 205 |

FIG. 13

Scenario architecture 300

| | | | |
|---|---|---|---|
| Server 301 | Data network 302 | Wi-Fi device 303 | Terminal 304 |

FIG. 14

1500

Terminal

Network device

S1501: First indication information →

← S1502: Second indication information

← S1503: Communicate a service frame →

FIG. 15

FIG. 16

FIG. 17

FIG. 18

FIG. 19

FIG. 20

FIG. 21

Apparatus 2200

Interface module 2201

Processing module 2202

FIG. 22

Apparatus 2300

Processor 2310

Memory 2330

Transceiver 2320

FIG. 23

## INTERNATIONAL SEARCH REPORT

| International application No. |
|---|
| **PCT/CN2022/136376** |

**A. CLASSIFICATION OF SUBJECT MATTER**

H04L5/00(2006.01)i;H04W52/02(2009.01)i;H04W76/28(2018.01)i

According to International Patent Classification (IPC) or to both national classification and IPC

**B. FIELDS SEARCHED**

Minimum documentation searched (classification system followed by classification symbols)

H04L5/-; H04W52/-; H04W76/-

Documentation searched other than minimum documentation to the extent that such documents are included in the fields searched

Electronic data base consulted during the international search (name of data base and, where practicable, search terms used)

CNABS; CNTXT; CNKI: 非连续接收, 非连续性接收, DRX, 扩展现实, 到达时间, 时延, 延时, 抖动, jitter, 业务帧, 突发长度, 配置授权, CG, 历史, 统计, 指示信息, 持续监测时间, PDCCH, 物理下行共享信道, 功耗, 浪费, 省电. VEN; USTXT; EPTXT; WOTXT; 3GPP: DRX, XR, extended reality, jitter, frame, burst length, PDCCH, CG, configuration grant, statistic+, histor+, discontinuous reception

**C. DOCUMENTS CONSIDERED TO BE RELEVANT**

| Category* | Citation of document, with indication, where appropriate, of the relevant passages | Relevant to claim No. |
|---|---|---|
| A | CN 111107561 A (SPREADTRUM COMMUNICATIONS (SHANGHAI) CO., LTD.) 05 May 2020 (2020-05-05)<br>description, paragraphs [0042]-[0084] and [0104]-[0108] | 1-28 |
| A | CN 110149680 A (BEIJING SAMSUNG TELECOM R&D CENTER et al.) 20 August 2019 (2019-08-20)<br>description, paragraphs [0157]-[0194] | 1-28 |
| A | CN 105119755 A (GUANGZHOU BAIGUOYUAN NETWORK TECHNOLOGY CO., LTD.) 02 December 2015 (2015-12-02)<br>entire document | 1-28 |
| A | US 2019098689 A1 (FG INNOVATION IP CO., LTD.) 28 March 2019 (2019-03-28)<br>entire document | 1-28 |

☐ Further documents are listed in the continuation of Box C.    ☑ See patent family annex.

| \* | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **22 February 2023** | **22 February 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
**Information on patent family members**

International application No.

**PCT/CN2022/136376**

| Patent document cited in search report | | | Publication date (day/month/year) | Patent family member(s) | | | Publication date (day/month/year) |
|---|---|---|---|---|---|---|---|
| CN | 111107561 | A | 05 May 2020 | CN | 111107561 | B | 19 July 2022 |
| CN | 110149680 | A | 20 August 2019 | None | | | |
| CN | 105119755 | A | 02 December 2015 | CN | 105119755 | B | 19 June 2018 |
| US | 2019098689 | A1 | 28 March 2019 | US | 2020413475 | A1 | 31 December 2020 |
| | | | | US | 11425783 | B2 | 23 August 2022 |
| | | | | US | 2022361285 | A1 | 10 November 2022 |
| | | | | KR | 20220108200 | A | 02 August 2022 |
| | | | | EP | 3689067 | A1 | 05 August 2020 |
| | | | | EP | 3689067 | A4 | 23 June 2021 |
| | | | | US | 10813163 | B2 | 20 October 2020 |
| | | | | JP | 2021500777 | A | 07 January 2021 |
| | | | | JP | 7036907 | B2 | 15 March 2022 |
| | | | | WO | 2019062827 | A1 | 04 April 2019 |
| | | | | KR | 20200052366 | A | 14 May 2020 |
| | | | | KR | 102425402 | B1 | 27 July 2022 |
| | | | | TW | 201922040 | A | 01 June 2019 |
| | | | | TWI | 678125 | B | 21 November 2019 |

Form PCT/ISA/210 (patent family annex) (July 2022)

**REFERENCES CITED IN THE DESCRIPTION**

**Patent documents cited in the description**

- CN 202111486066